# EUROPEAN PATENT SPECIFICATION

(11) **EP 2 852 307 B1**
(45) Date of publication and mention of the grant of the patent: **09.12.2015**
(21) Application number: 13765498.4
(22) Date of filing: 15.07.2013
(51) Int. Cl.: A47J 27/04

(54) **DEVICE FOR STEAMING FOOD**
VORRICHTUNG ZUM GAREN VON LEBENSMITTELN
DISPOSITIF PERMETTANT DE CUIRE À LA VAPEUR DES ALIMENTS

(30) Priority: 19.07.2012 EP 12177081
(43) Date of publication of application: 01.04.2015
(73) Proprietor: Koninklijke Philips N.V., 5656 AE Eindhoven (NL)
(72) Inventor: DOUMA, Sipke, Theo, NL-5656 AE Eindhoven (NL); PAAUW, Hendrik, Klaas, NL-5656 AE Eindhoven (NL); ZWANENBURG, Godwin, Dirk, NL-5656 AE Eindhoven (NL); VAN ZUTPHEN, Martijn, NL-5656 AE Eindhoven (NL); DUINISVELD, Sebastiaan, Johannes, Nicolaas, NL-5656 AE Eindhoven (NL); TEN DONKELAAR, Henk, Jan, NL-5656 AE Eindhoven (NL)
(74) Representative: Coops, Peter
(86) International application number: PCT/IB2013/055812
(87) International publication number: WO 2014/013417

(56) References cited:
- US-A1- 2006 108 348
- US-A1- 2010 154 652
- US-B1- 6 840 159

## Description

### FIELD OF THE INVENTION

The present invention relates to a device for steaming food, comprising a base part and at least one basket which is intended to be positioned above the base part in a normal orientation of the device, wherein the at least one basket has a bottom provided with holes for letting through steam and a standing wall projecting from the bottom and delimiting a space above the bottom for receiving and containing food to be steamed, and wherein the base part comprises a steam chamber for containing water to be converted into steam and heating means associated with the steam chamber for heating water which is inside the steam chamber, and also a reservoir for containing water to be supplied to the steam chamber, which is in fluid communication with the steam chamber.

### BACKGROUND OF THE INVENTION

A device for steaming food as defined in the foregoing is known, for example from US 6,840,159. In the known steaming device, the base part comprises a heater unit having a space which serves as a reservoir for receiving and containing water, a drip tray which is intended to be positioned on top of the heater unit in a normal orientation of the device, and a sleeve which is used for delimiting a steam chamber inside the reservoir. The heater unit also has a cylindrical hollow protrusion which serves as a heater and which projects upwardly from the center of the reservoir. During use, water is supplied into the reservoir, and then the drip tray, one or more baskets filled with food, and a cover are stacked on the heater unit. Each of the baskets is formed with a plurality of steam holes in a bottom thereof. When the heater unit is activated, water in the reservoir is heated by the hollow protrusion such as to generate steam. Steam is sent upward through a central hole in the drip tray and the steam holes in each basket so as to cook the food in the respective baskets by a steaming operation.

The sleeve serves for quickening the pace at which steam is produced. In particular, the sleeve has a single layer tubular wall formed with a water inlet in the form of a notch at a bottom periphery thereof and surrounding an outer periphery of the hollow protrusion. The tubular wall and a peripheral wall of the hollow protrusion define therebetween a small space which confines a small amount of water that is isolated from the remainder of the water in the space of the heater unit. In other words, the sleeve defines a steam chamber in the reservoir. When the hollow protrusion is heated, the water confined in the small space between the tubular wall and the peripheral wall of the hollow protrusion is heated first, and then the water in the reservoir gradually enters the small space through the water inlet, as the water vaporizes from the steam chamber and a water level inside the heating chamber continually rises such as to become equal to a water level inside the reservoir. Steam is thus produced quickly.

Still, it appears in practice that the amount of steam which is produced is not sufficient, especially during a start-up phase of the operation of the device. Having much steam for realizing a high heating-up rate is especially important when the steaming device is used for cooking green vegetables. It is a known fact that blanching green vegetables yields better results as far as color and taste are concerned than cooking the vegetables in cold water that is slowly brought to boiling point. The reason is found in the fact that the enzyme chlorophylase, which is capable of breaking down chlorophyll, is most active at temperatures between 66°C and 77°C. Chlorophyll is responsible for the green color in green vegetables, and by avoiding the temperature range as mentioned as much as possible, discoloration is minimized. This is also true in the context of steaming, and therefore, care should be taken that a process of heating up food to be steamed should take place as quickly as possible.

An obvious way of ensuring that food to be cooked is heated up fast is exposing the food to steam only after the steaming device has heated up during a pre-heating process. However, for several reasons, such way of doing is not a practical option. Besides the fact that a pre-heating process takes time, supplying food to be cooked to a steaming device at a later stage conflicts with the unattended nature of food steaming, and also involves a risk for a user who might burn his/her hand on the hot steam.

Another obvious way of ensuring that a high steam production is realized is using one or more extremely powerful heaters. However, disadvantages of such a solution are an increase of costs, an increase of power consumption, and bulkiness of the device, just to mention a few.

### SUMMARY OF THE INVENTION

In view of the above, it is an object of the present invention to provide a steaming device which is very suitable to be used for the purpose of steaming green vegetables in that it is capable of realizing steaming conditions in which color and taste of the vegetables are maintained to a very acceptable extent, without simply increasing heating capacity. The object is achieved by means of a steaming device in which the reservoir is in fluid communication with the steam chamber through at least one channel, wherein the channel is configured to allow for a flow of water from the reservoir to the steam chamber while counteracting a flow of water from the steam chamber to the reservoir on the basis of differences in the nature of the respective flows, wherein the base part further comprises a separation tube for defining the steam chamber inside the reservoir, wherein the separation tube contacts a bottom of the reservoir with a first end when the separation tube is in place in the base part, and wherein the first end of the separation tube is provided with a recess for forming the channel between the reservoir and the steam chamber, which channel is delimited by walls and a bottom of the recess and a part of the bottom of the reservoir which is covered by the separation tube.

When the present invention is applied, it is possible to realize a very effective heating-up process in a steaming device comprising a steam chamber, heating means associated with the steam chamber, and a reservoir which is in fluid communication with the steam chamber for supplying water to the steam chamber. US 6,840,159 teaches that the steaming rate is less than optimal on the basis of the fact that the sleeve which is used for separating the water inside the steam chamber from the remainder of the water is unable to thermally isolate the one quantity of water from the other. In view thereof, a solution is found in applying a quick steam producing cap which includes a jacketed tubular wall having inner and outer wall layers and a sealed insulating space defined between the inner and outer wall layers. However, according to an insight underlying the present invention, there is another, even more dominant factor which has an influence on the steaming rate, namely the fact that the water inside the steam chamber is in fluid communication with the relatively cold water of the reservoir, through the water inlet of the steam chamber. It may seem logical to expect the water from the reservoir to flow to the steam chamber under the influence of gravity, especially on the basis of the principle of communicating vessels, and not the other way around, but it now has been found that a boiling process inside the steam chamber creates turbulent flow patterns and dynamic pressure changes, causing hot water to be pressed out via the water inlet. However small the water inlet may be, this causes significant heat leakage to the reservoir, slowing down the steam production.

Minimizing and accurately controlling the water inlet is a way of speeding up the steam production, but some mixing of cold and hot water cannot be avoided, since the water inlet cannot be made too small in view of the fact that the heater might otherwise run dry. According to the present invention, a solution to the problem as explained in the foregoing is obtained by having at least one channel between the reservoir and the steam chamber, wherein a possibility of configuring the channel for allowing for a flow of water from the reservoir to the steam chamber while counteracting a flow of water from the steam chamber to the reservoir on the basis of differences in the nature of the respective flows is recognized.

In order to realize the configuration as desired of the channel between the reservoir and the steam chamber, the base part further comprises a separation tube having a recess in an end which is intended to contact a bottom of the reservoir, which end is referred to as first end for sake of clarity. In a general sense, as far as a function of delimiting the steam chamber is concerned, the separation tube is comparable to the sleeve known from US 6,840,159. However, the known sleeve is not provided with a recess for forming a channel at the end which is intended to contact the bottom of the reservoir, but only has a notch for forming a water inlet to the steam chamber instead, as explained earlier.

The first end of the separation tube, i.e. the end for contacting the bottom of the reservoir, is provided with a recess as mentioned, and can be furthermore provided with notches for allowing access to the recess from outside of the separation tube when the first end of the separation tube contacts the bottom of the reservoir. The number of notches is at least two, wherein one notch is arranged for providing access to the recess from outside of the separation tube at the side of the reservoir, and wherein another notch is arranged for providing access to the recess from outside of the separation tube at the side of the steam chamber. When the separation tube is shaped such that both an inner circumference and an outer circumference of the tube are circular, the recess can be ring-shaped.

Advantageously, notches in an outer circumference of the first end of the separation tube are arranged at another angular position with respect to a longitudinal axis of the separation tube than notches in an inner circumference of the first end of the separation tube. In this way, a labyrinth can be obtained, which is capable of damping the water flow between the steam chamber and the reservoir, wherein dynamic pressure differences prevent the water from the steam chamber from flowing to the reservoir, while the dimensions of the labyrinth can be large enough for enabling a sufficient supply of water from the reservoir to the steam chamber during a steaming process.

It is noted that US 2006/108348 discloses the application of a labyrinth in a steam cooker comprising a container which is located within a base of the steam cooker, wherein two interacting barriers are provided for dividing the container into a central compartment and a peripheral compartment which are in fluid communication with each other. The labyrinth is present between the two barriers, which may be loop-shaped, for example, and which may extend substantially vertically from a top surface of a bottom wall of the container. In particular, the barriers define therein a loop-shaped channel, wherein a first opening is provided along one side of an outer barrier, and wherein a second opening is provided along one side of an inner barrier opposite to the first opening. The first and second openings are preferably located at a bottom of the barriers. Each of the barriers may be provided with more than one opening if so desired.

US 2006/108348 teaches that the barriers as well as the openings control the movement of water within the container and govern the fluid communication between the central and peripheral compartments, so that the water remains at a relatively low temperature as compared to the temperature of the water within the central compartment. Thus, the application of the barriers is useful for avoiding heating up of water in the peripheral compartment and in turn a sidewall of the base, whereby both a waste of energy and a risk of burning for a user of the steam cooker are considerably reduced. However, a disadvantage of the known application of the two barriers is that it is quite difficult to manufacture the base, as the distance between the barriers needs to be relatively small. In respect of this distance, a practical example of only 4 mm is disclosed. Another disadvantage of the known configuration is that bad cleanability is obtained. It is practically impossible for the user of the steam cooker to clean the narrow space which is present between the barriers. Furthermore, it is difficult for the user to reach the openings which are located at the bottom of the barriers. It is generally known that scale deposit occurs in water reservoirs, especially when the water is frequently heated. Due to contamination with scale and possibly other types of contamination, clogging of the openings and/or the narrow intermediate space may be expected, which has a negative influence on the steaming function of the steam cooker.

The problems associated with the steam cooker known from US 2006/108348 are not applicable to the steaming device according to the present invention in view of the fact that the steaming device comprises a separation tube having a recess in an end for facing the bottom of the reservoir instead of two barriers defining a narrow space between them. A separation tube as mentioned is easy to manufacture, for example by using injection molding techniques in a conventional manner, and a cleaning action only requires removing the separation tube from the base part of the steaming device and brushing, scrubbing, or otherwise treating the first end of the separation tube, which is easily accessible in that case.

In a practical embodiment of the steaming device according to the present invention, use is made of the difference between the nature of the flow of water from the reservoir to the steam chamber and the nature of the flow of water from the steam chamber to the reservoir. In particular, in such an embodiment, the channel between the reservoir and the steam chamber is configured to allow water to flow through steadily while resisting a flow of water with high frequent changes. Such a channel functions like a low pass filter, comparable to that which is achieved in the electrical domain with a so-called resistor-capacitor network (RC network). In the hydraulic domain, the desired functionality can be achieved by choosing an appropriate configuration of the channel.

Within the framework of the present invention, it is advantageous if a cross-section of the channel is in a range of 0.5 to 50 mm², and a length of the channel is at most 500 mm. In this respect, it is noted that a ratio between the cross-section and the length determines the so-called cut-off frequency, i.e. the minimum frequency at which a flow of water is highly resisted. For sake of completeness, in respect of the cross-section of the channel, it is furthermore noted that the cross-section can have any suitable shape.

It follows from the foregoing explanation that the present invention provides a way of increasing the steaming rate of a steaming device, according to which heat loss from the steam chamber to the reservoir is minimized by making use of natural phenomena. Hence, when the present invention is applied, the steam chamber can still be automatically filled with water under the influence of only gravity, on the basis of the principle of communicating vessels. It is an achievement of the present invention that the desired effects are achieved on the basis of measures which are exclusively of a constructional nature, and which involve a design allowing for easy manufacture and excellent cleanability.

Preferably, in the steaming device according to the present invention, the components involved in producing steam, particularly the steam chamber, the associated heating means, the reservoir and the channel between the reservoir and the steam chamber, are capable of realizing an average steam production efficiency of at least 0.2 gram per Joule of heat provided by the heating means, at least during a period of 1.5 to 5 minutes after start-up of a steaming process to be performed by the device. As explained in the foregoing, a process of heating up food to be steamed is a critical process which should take place as quickly as possible. Due to the special features of the channel between the reservoir and the steam chamber of the device according to the present invention, it is actually possible to achieve a relatively high steam production efficiency. As an advantageous result, a favorable heating-up rate of the food to be steamed can be achieved. For sake of completeness, it is noted that a period of 1.5 to 5 minutes after start-up of a steaming process can be denoted as being a period which is associated with a start-up phase of the operation of the device, i.e. a phase of the operation of the device which starts at activation of the device. During the start-up phase, all components of the device involved in the steaming of the food, particularly the baskets, need to warm up from ambient temperature to a considerably higher temperature. Hence, in order to guarantee a process in which the food to be steamed is heated up fast, production of relatively large amounts of steam is necessary. In view of the heat loss which takes place through the fluid connection between the reservoir and the steam chamber, known steaming devices are not very efficient and are not capable of realizing a steam production which is as high as the steam production of the device according to the present invention during the start-up phase.

When the present invention is applied, it may even be possible to realize an average steam production efficiency of at least 0.3 gram per Joule of heat provided by the heating means, at least during the period as mentioned earlier, i.e. the period of 1.5 to 5 minutes after start-up of a steaming process to be performed by the device. In any case, it is possible to realize an average steam production efficiency of at least 0.1 gram per Joule of heat provided by the heating means, at least during the period as mentioned earlier. It will be understood that with a higher steam production efficiency, a higher steaming rate is obtained, whereby a higher heating-up rate is achieved. The present invention offers a practical possibility of realizing a heating-up rate which is sufficient for guaranteeing excellent color and taste of steamed vegetables.

The basket can have any suitable shape as long as something like a bottom for supporting food to be steamed and something like an upstanding wall for retaining the food to be steamed on the bottom are present. In a practical embodiment, the bottom can be chosen such as to have a more or less flat appearance. The standing wall can be shaped according to a circle or an ellipse, for example, or according to a square or a rectangle, whether provided with rounded corners, or not. In any case, it is advantageous for the shape of the standing wall to be chosen such that a largest distance between the wall and a geometric center axis of the basket and a smallest distance between the wall and the axis as mentioned do not deviate too much with respect to each other, i.e. are in a comparable order of magnitude, so that the basket is free from projecting areas which are apt to remain at a lower temperature than more centrally positioned areas during a steaming process, or which would require the presence of heaters at various positions in the device. For sake of completeness, it is noted that in a basket having a flat bottom and a standing wall extending perpendicular with respect to the bottom and having a symmetric shape, the geometric center axis is defined by the axis of symmetry of the standing wall and extends as a straight line in an orientation which is parallel to the standing wall and perpendicular to the bottom.

In an advantageous embodiment of the steaming device according to the present invention, the base part further comprises a drip tray for receiving fluid from the at least one basket during operation of the device and for closing an open top side of the reservoir, wherein the separation tube contacts the drip tray with a second end, and supports the drip tray on the bottom of the reservoir when the separation tube and the drip tray are in place in the base part. If a drip tray is present, it is possible to let the separation tube be part of the drip tray, wherein the tube extends down from a bottom of the drip tray. However, in such a case, there is usually a significant gap between the separation tube and the bottom of the reservoir, due to manufacturing tolerances. Within the framework of the present invention, the presence of such a gap cannot be accepted as it would render useless the measures which are taken for avoiding mixing of the relatively hot water of the steam chamber and the relatively cold water of the reservoir. In some cases, like the case known from US 6,840,159, the separation tube is executed as a separate part, resting on the bottom of the reservoir. This largely eliminates the manufacturing tolerances problem, so that it is possible to have a well-defined water inlet of the steam chamber, but having a separate part is a major drawback, as consumers often forget to put the separation tube in place, or even lose it. The present invention overcomes this dilemma by providing a separation tube which extends between the drip tray and the bottom of the reservoir, and which supports the drip tray on the bottom of the reservoir when the separation tube and the drip tray are in place in the base part of the steaming device. Under the influence of the weight of the drip tray, the manufacturing tolerances problem is eliminated, wherein it is possible for the separation tube to be an integral part of the drip tray, so that the problems associated with having a separate part are solved as well.

As is the case with the steaming device known from US 6,840,159, the heating means of the steaming device according to the present invention may comprise a bulb-shaped heater which is arranged in the reservoir, wherein the separation tube surrounds the heater at a close distance when the separation tube is in place in the base part, in order to have a relatively small volume of the steam chamber so that heating up the water inside the steam chamber requires a minimum amount of time, and a maximum steam production for the available power can be achieved. In respect of the heating means, it is noted that any appropriate embodiment is possible within the framework of the present invention, wherein the bulb-shaped heater is just one example of the many possibilities.

According to the present invention, it is advantageous to have at least one phase in a steaming process during which steaming takes places at a temperature lower than 100 °C. It has been found that such low temperature steaming results in optimal taste and texture in many types of food, such as fish, potatoes and rice, on the basis of the fact that enzymes are made to come to their best expression. Therefore, there is a need for realizing a steaming process during which temperatures are controlled in an accurate way. In this respect, it is proposed to have a circuit for controlling a power supply to the heating means in the steaming device, wherein the circuit comprises a temperature sensor which is arranged at a distance with respect to a first imaginary ring-shaped plane defined by an outer wall of a steam outlet of the steam chamber and an extension thereof in a range of 0.5 to 0.9 of a total distance between the first imaginary ring-shaped plane and a second imaginary ring-shaped plane defined by the standing wall of the at least one basket and an extension thereof, measured along an imaginary line intersecting both a geometric center axis of the steam outlet and the position of the temperature sensor, in a plane perpendicular to the geometric center axis of the steam outlet. In other words, when a cylindrical coordinate system in which the longitudinal axis is constituted by the geometric center axis of the steam outlet is assumed, a radial distance of the temperature sensor with respect to the imaginary ring-shaped plane associated with the steam outlet is in a range of 0.5 to 0.9 of a total distance between the imaginary ring-shaped plane as mentioned and the imaginary ring-shaped plane associated with the at least one basket, measured in a reference plane where the temperature sensor is present, along a radius intersecting the position of the temperature sensor.

Thus, in order to realize accurate control of the steaming temperature, it is advantageous to have a suitable controlling circuit which is equipped with a temperature sensor. According to an insight underlying the present invention, it is important to make a smart choice when it comes to positioning of the temperature sensor. When the temperature sensor is placed too close to the outside of the steaming device, a measurement performed by the sensor will be influenced too much by the temperature of the surroundings of the device, i.e. the room temperature, and when the temperature sensor is placed too close to the steam outlet of the steam chamber, a measurement performed by the sensor will be influenced too much by the temperature of the steam. It is an achievement of the present invention that a specific range is now defined in respect of the positioning of the temperature sensor, on the basis of which the most accurate results can be obtained.

In theory, an ideal position of the temperature sensor would be a position in the at least one basket, so that the sensor would be capable of giving the most accurate data representing the actual temperature close to the food in the basket. However, such a position would not be very practical, as a complex construction would be needed. Another disadvantage would be that the sensor would occupy space which could otherwise be used for accommodating food. As a practical alternative, in case the steaming device comprises a drip tray, it is possible for the temperature sensor to be at a position in the drip tray. In this way, the temperature sensor can be positioned close to the bottom of the at least one basket, thereby yielding relevant data which are representative of the temperature prevailing in the area of the food in the basket, without interfering with the construction and/or other functionalities of the steaming device.

Advantageously, the controlling circuit is programmed to realize at least three temperature phases during operation of the steaming device, wherein a temperature associated with an intermediate temperature phase is lower than temperatures associated with a start temperature phase and a final temperature phase. In that case, the intermediate temperature phase can be a phase of low temperature steaming as mentioned earlier. However, when using low temperature steaming, it takes much more time before the food is done than with regular steaming at 100°C. This problem is overcome by realizing the three temperature phases as mentioned, wherein, during the first phase, a fast heating-up process is carried out during a time which is long enough for the steaming device to heat up, but which is not so long that the food overheats, wherein, during the second phase, a low temperature steaming process is carried out during a period which is long enough for the taste and the texture of the food to be optimal, but which is not so long that the whole steaming process takes an unnecessarily long time, and wherein, during a third phase, a regular steaming process is carried out in order to achieve doneness of the food in an accelerated way when compared to the low temperature steaming process. For sake of completeness, in respect of the low temperature steaming process, it is noted that such a process may be achieved by reducing the steaming power and/or adding air to the steam, as described in EP 2 338 390, for example.

The third temperature phase may be followed by a fourth temperature phase, wherein the food which is ready is kept warm. In particular, the phases as described in the following can be realized in the steaming device according to the present invention: a first phase, in which a temperature is set in a range between 80°C and 100°C, during a time in a range between 2 and 10 minutes, a second phase, in which a temperature is set in a range between 50°C and 90°C, during a time in a range between 0 and 120 minutes, a third phase, in which a temperature is set in a range between 90°C and 100°C, during a time in a range between 0 and 120 minutes, and a fourth phase, in which a temperature is set in a range between 60°C and 100°C, during a time in a range between 0 and 60 minutes. For example, in a process for steaming fish, it is advantageous if the setpoint in the second phase is between 60°C and 80°C, and if the duration of the third phase is 0 minutes, so that the third phase is skipped, as in such a way, the taste and texture of the fish can be improved with respect to the result of conventional steaming processes. In a process for steaming potatoes, it is advantageous if the setpoint in the second phase is between 60°C and 80°C, and if the duration of the second phase is 15-60 minutes, as in such a way, the taste and texture of the potatoes can be improved with respect to the result of conventional steaming processes. In a process for steaming rice, it is advantageous if the setpoint in the second phase is between 45°C and 60°C, and if the duration of the second phase is 15-60 minutes, as in such a way, the taste and texture of the rice can be improved with respect to the result of conventional steaming processes.

It is known to have a tray for containing items for adding flavor and aroma to the food to be steamed in a steaming device. For example, US 5,653,161 discloses a steaming device comprising a drip tray in which a screen for supporting herbs, spices, or any other suitable type of food flavoring item is present in a tube which serves as steam outlet of the steam chamber of the device to the basket of the device. In this way, when herbs and spices are placed on the screen, indeed, it is achieved that they are incorporated in the steam as the food is being cooked, wherein the food can absorb the flavors throughout as they cook. The addition of herbs and spices allow a user of the steaming device to experiment with new flavors to enhance the taste of fresh vegetables and other food. By having the herbs and spices on a screen and thereby separating them from boiling water, cleaning of the reservoir and the steam chamber is facilitated, and build up of any unwanted residue at the heater is reduced. A problem associated with the use of the screen is that when a generous amount of flavoring items is present on the screen, it may occur that steam is produced faster than can be vented through the steam outlet. US 5,653,161 teaches that in order to solve this problem, the steaming device is equipped with pressure vents, so that excess pressure can vent therethrough. The vented steam is still used to cook the food, but merely has not been flavored by the flavoring items. In order words, the taste and the aroma of the food to be cooked are compromised for the purpose of avoiding situations of high pressure by using a by-pass of the steam outlet. As a result, the effectiveness of flavoring the food is significantly reduced.

For sake of completeness, it is noted that situations of high pressure should be avoided at all times. In the first place, such situations may lead to on/off switching of the steaming device due to the counter pressure in the steam outlet, which causes a reduction of steaming power available for the food to be steamed. Also, safety could be at stake, because the steam pressure will push hot water out of the steam chamber through every possible hole in the steaming device. In general, a situation in which an internal pressure inside a device is high is an unwanted situation as in extreme cases, the steam can force a way out by pushing away a weakest element of the device.

It is an object of the present invention to provide a steaming device comprising a tray for containing items for adding flavor and aroma to the food to be steamed, which has a bottom that is at least partially permeable to steam, and which is intended to be positioned below the at least one basket in the normal orientation of the device, in a path followed by the steam from the steam chamber to the basket during operation of the device, as is the case in the steaming device known from US 5,653,161, wherein the problem of high pressure situations is solved in another way than by having a permanent bypass of the tray, so that flavoring items can be used to an optimal extent. The object is achieved by means of a steaming device in which the tray is loosely positioned on top of a steam outlet of the steam chamber to the at least one basket.

In the context of the present invention, it has been found that the tray for containing items for adding flavor and aroma to the food to be steamed, which will hereinafter be referred to as aroma infuser, can be arranged in the steaming device in such a way as to be used as a kind of valve. In particular, by choosing an arrangement in which the tray is loosely positioned on top of the steam outlet, a safety mechanism is realized according to which the aroma infuser is lifted when the pressure would build up too high. In a default position of the aroma infuser, all steam passes through the herbs and spices supported by the aroma infuser before it enters the at least one basket. Only in a lifted position of the aroma infuser, the steam is allowed to bypass the aroma infuser. In this way, optimal use of herbs and spices which are supported by the aroma infuser is guaranteed, as the times during which steam is allowed to bypass the aroma infuser are kept to a minimum. Hence, the tray is a separate component of the steaming device, which can be arranged for covering the complete steam outlet, while maximum flavor transfer is combined with a safe and high performance of the steaming device.

Within the framework of the present invention, it is possible that a kind of seating is present at a top side of the steam outlet, so that the aroma infuser can rest on the seating in the default position. Also, a resilient member can be used for exerting a spring force on the aroma infuser, which needs to be counteracted by the steam first before the aroma infuser can be lifted. Naturally, the spring force exerted by the resilient member should be low enough to avoid any risk of the pressure below the aroma infuser getting too high. Three factors determining a threshold force at which the aroma infuser can be lifted by the steam are the spring force as mentioned, the weight of the aroma infuser, and a friction force between the aroma infuser and the steam outlet, possibly the seating at the top side of the steam outlet. When the force which is defined as the cross-sectional area of the aroma infuser times the pressure exerted by the steam exceeds the sum of the weight of the aroma infuser, the friction force associated with the contact of the aroma infuser to the steam outlet, and the possible spring force, the aroma infuser is lifted from the steam outlet so that the pressure can decrease. As soon as the pressure of the steam decreases, the aroma infuser assumes a position at a lower level again. In general, the position of the aroma infuser is automatically adjusted, wherein a situation in which the steam can be higher than a threshold value which is associated with the threshold force as mentioned earlier cannot occur.

Another problem which is associated with the use of an aroma infuser resides in the fact that the effectiveness of the flavor transfer is reduced as soon as the herbs and spices get wet, which may easily occur in an environment where water and steam are present if no appropriate measures are taken. In particular, condensed steam can leak back from the at least one basket to the steam outlet, wherein the water passes the aroma infuser and wets the items carried by the aroma infuser. Also, when water leaks in the aroma infuser, it can happen that the aroma infuser gets more or less blocked, as a result of which the heating process of the food is disturbed. Besides the problems with the aroma infuser, there is a general problem associated with a situation in which water flows down from the at least one basket to the steam outlet. The general problem has to do with the fact that the water is not pure water, but water containing proteins, starches or the like due to the fact that the food to be steamed may have transferred substances into the water. When water containing proteins, starches or the like falls into the reservoir and the steam chamber, foaming occurs in the water which is present in the reservoir. As the foam bubbles carry water from the reservoir to the drip tray, the reservoir is emptied too fast and an oily mess is obtained in the reservoir. All in all, there is a need for a way of preventing water to flow back to the aroma infuser and the underlying steam outlet of the steam chamber.

According to the present invention, the problems as mentioned are solved by designing the bottom of the at least one basket with a dome-shaped area at a position for covering the aroma infuser with a concave side facing the aroma infuser. The radius of the dome can easily be chosen such as to be at least equal to the radius of the aroma infuser and the steam outlet. Water dripping on the dome-shaped area runs to the outer periphery of the dome-shaped area and exits the at least one basket at that position, wherein it is not possible for the water to fall into the aroma infuser and/or the steam outlet. Water which is present on a bottom side of the dome-shaped area runs to the outer periphery of the dome-shaped area by gravity and adhesive force between the water and the dome-shaped area.

Advantageously, holes for letting through steam are arranged in the dome-shaped area, so that a good steaming performance is ensured in all areas of the at least one basket, including the dome-shaped area. Preferably, in order to avoid droplets of water to fall through the holes and reaching the aroma infuser and/or the steam outlet after all, ribs are arranged at the bottom side of the dome-shaped area, wherein each rib extends between a hole and the outer periphery of the dome-shaped area. On the basis of the presence of the ribs, it is achieved that water dripping through the holes is guided to the outer periphery of the dome-shaped area under the influence of gravity and adhesive forces, so that when the water falls down from the at least one basket, it is not possible for the water to reach the aroma infuser and/or the steam outlet. In order to enhance the guiding function of the ribs, wherein the water does not fall down from the ribs until the outer periphery of the dome-shaped area has been reached, it is a practical option for the ribs to comprise two edges extending alongside each other, so that capillary forces play a role in keeping the water on the ribs as well, acting against gravity.

Another way in which the aroma infuser and the contents of the aroma infuser can get wet is under the influence of splashing of the boiling water in the steam chamber in the direction of the aroma infuser, through the steam outlet. This is solved by arranging some kind of shielding means in the steam outlet, which are adapted to prevent direct splashing, yet to allow steam to pass through. In a practical embodiment, the shielding means can be provided in the form of a unit comprising at least two layers with holes at mutually different positions as seen in a direction of the path followed by the steam from the steam chamber to the at least one basket during operation of the device. Due to the shifted position of the holes of the two layers, direct splashing is impossible, while steam is allowed to travel through the holes and pass the layers. A unit as mentioned can be made in plastic without a need for a difficult tool setup or separate parts.

The steaming device according to the present invention may comprise a resettable thermal cut off element for terminating a power supply to the heating means in case a temperature of the heating means is above a predetermined maximum, means for detecting whether the heating means are powered or not, a circuit for controlling a power supply to the heating means and for receiving information from the detecting means, and a refill indicator, wherein the controlling circuit is programmed to activate the refill indicator when being in a state for realizing a power supply to the heating means as soon as the information provided by the detecting means indicate that the heating means are nonetheless not powered. It is a well-known fact that the detection of an empty reservoir, or a nearly empty reservoir, in food steaming devices is a convenient option for users of such devices. Performing the detection by means of a float or other measurement means costs money and is sensitive to pollution. Using a thermal cut off element, also known as thermostat, detecting when it switches the power supply to the heating means off, and comparing this situation with a required situation of operation of the heating means, can provide an indication that the heating means overheat. This is actually the case when the power supply is switched off by means of the thermal cut off element while the controlling circuit indicates that the power supply should be switched on. Assuming normal functioning of the steaming device, the heating means can only overheat when there is not enough water in the reservoir, so that an indication of the need to refill can be based on detection of the situation of overheating. The costs of this way of generating a refill signal are almost none, while the reliability is extremely high.

The above-described and other aspects of the present invention will be apparent from and elucidated with reference to the following detailed description of a steaming device and various components of the steaming device.

### BRIEF DESCRIPTION OF THE DRAWINGS

The present invention will now be explained in greater detail with reference to the figures, in which equal or similar parts are indicated by the same reference signs, and in which:
Figure 1 shows an exploded view of a steaming device according to the present invention, wherein only one basket of the steaming device is shown;
Figure 2 shows a side view of the steaming device, wherein three baskets are shown;
Figure 3 shows a view of a longitudinal section of the steaming device, wherein only one basket is shown, and wherein furthermore an aroma infuser which can be part of the device is shown;
Figure 4 shows a perspective view of an end of a separation tube for defining a steam chamber inside the steaming device;
Figure 5 illustrates two examples of a path of water through a labyrinth which is present at the end of the separation tube shown in figure 4;
Figure 6 diagrammatically shows an area associated with a range of an optimal position of a temperature sensor of the steaming device;
Figure 7 diagrammatically shows an arrangement of the aroma infuser at a top side of a steam outlet of the steam chamber to the basket, wherein flows of steam are indicated by means of arrows;
Figures 8 and 9 show two views of a bottom of the basket of the steaming device;
Figures 10 and 11 diagrammatically show two variants of an anti-splashing unit which is arranged in the steam outlet of the steam chamber to the basket, wherein flows of water and steam are indicated by means of arrows; and
Figure 12 diagrammatically shows elements of a circuit for controlling a refill indicator of the steaming device.

### DETAILED DESCRIPTION OF EMBODIMENTS

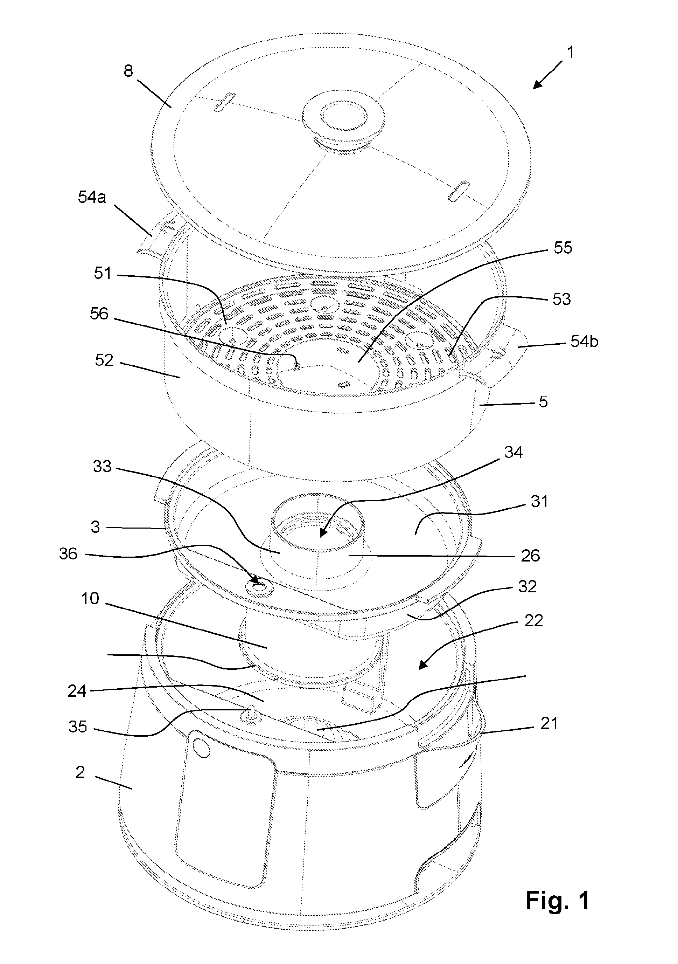

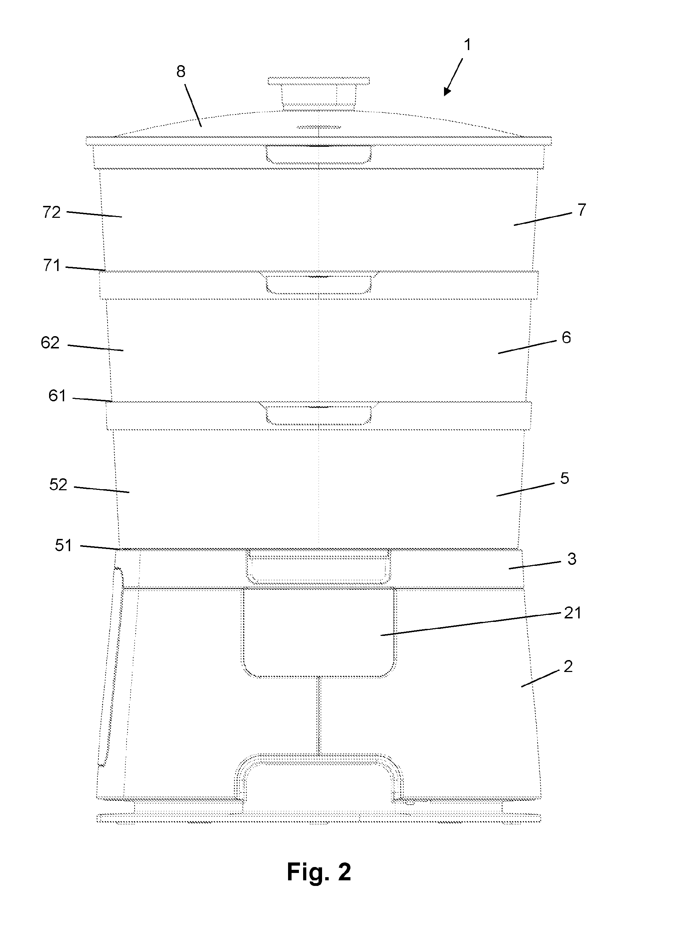

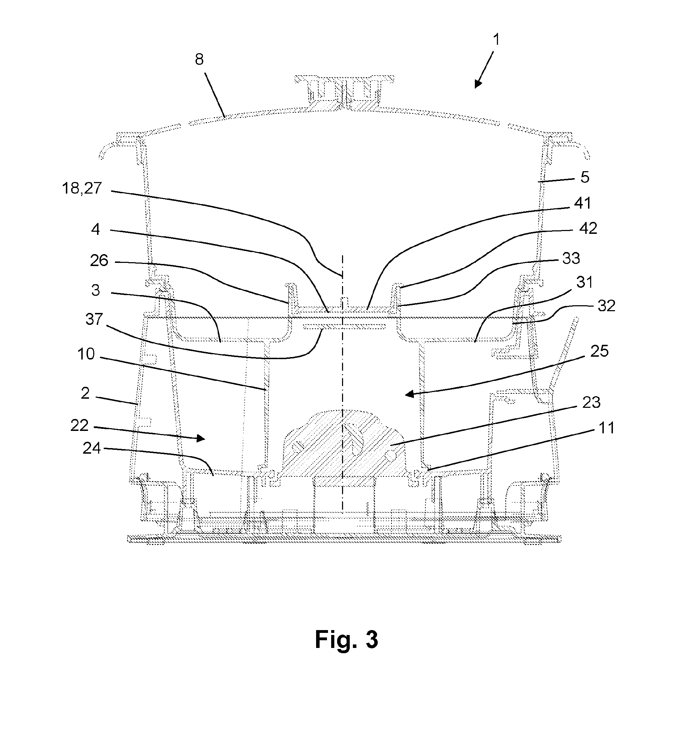

Figure 1 shows an exploded view of a steaming device 1 according to the present invention, figure 2 shows a side view of the steaming device 1, and figure 3 shows a view of a longitudinal section of the steaming device 1. In figures 1 and 3, only one basket 5 of the steaming device 1 is shown, while in figure 2, three baskets 5, 6, 7 are shown. The orientation of the steaming device 1 as shown in figure 2 is a normal orientation of the device 1. It is noted that in the following, when terms like "bottom" and "top" are used, this normal orientation of the device 1 is assumed. In particular, the normal orientation of the device 1 is an orientation in which a base part 2 of the device 1 is at a bottom side of the device 1, a drip tray 3 is placed on top of the base part 2, one or more baskets 5, 6, 7 are placed on top of the drip tray 3, and a cover 8 is placed on top of the basket(s) 5, 6, 7.

The steaming device 1 is intended to be used for cooking food by steaming the food. Types of food which can be prepared in this way include rice, fish, and vegetables like potatoes, broccoli, cauliflower, carrots, etc. Various types of food can be steamed at one time by using more than one basket 5, 6, 7 and/or having a partition baffle (not shown) in a basket 5, 6, 7 if so desired. A user of the steaming device 1 is free to decide how many baskets 5, 6, 7 should be used in a cooking process. Each of the baskets 5, 6, 7 comprises a bottom 51, 61, 71 for supporting the food and a standing wall 52, 62, 72 for delimiting a space above the bottom 51, 61, 71 for receiving and containing the food. The baskets 5, 6, 7 can be made in two parts, such that the bottom 51, 61, 71 can be detached from the standing wall 52, 62, 72, which involves good cleanability of the baskets 5, 6, 7, but this is not essential within the framework of the present invention.

In the following, for sake of clarity, it will be assumed that only one basket 5 is used in the steaming device 1, as shown in figures 1 and 3. Furthermore, characteristics of the baskets 5, 6, 7 will be described with reference to only one basket 5, wherein it is assumed that the baskets 5, 6, 7 are identical. It is emphasized that the number of baskets 5, 6, 7 which are provided with the steaming device 1 can be chosen freely within the framework of the present invention. Also, it is noted that if more than one basket 5, 6, 7 are available, the baskets 5, 6, 7 do not necessarily need to be identical, although it is convenient to a user of the steaming device 1 if they are.

The bottom 51 of the basket 5 is provided with holes 53 for letting through steam in an upward direction. The periphery of the basket 5 can have any suitable shape, and the same is true in respect of the peripheries of the base part 2, the drip tray 3, and the cover 8. The peripheries of the components 2, 3, 5, 8 as mentioned are generally the same, so that when the components 2, 3, 5, 8 are stacked on top of each other, an entirety is obtained which is free from irregularities in its outer surface, except for some practical projections like grips 54a, 54b of the basket 5 and a filling port 21 of the base part 2. In the shown example, the peripheries of the base part 2, the drip tray 3, the basket 5 and the cover 8 are circular. Other suitable shapes of the peripheries include an oval shape, a square shape, and a rectangular shape. In the latter two cases, it is possible for corners of the components 2, 3, 5, 8 to have rounded corners.

The base part 2 comprises a space which serves as a reservoir 22 for receiving and containing water to be used in the production of steam during operation of the steaming device 1. At a central position inside the reservoir 22, a bulb-shaped heater 23 for supplying heat to the water is present. Electronic elements which are needed for operating and controlling the heater 23 are positioned underneath a bottom 24 of the reservoir 22. For the purpose of allowing a user of the steaming device 1 to fill the reservoir 22 with water in a convenient manner, the base part 2 comprises the filling port 21 as mentioned earlier.

Important functions of the drip tray 3 are receiving fluid from the basket 5 during operation of the steaming device 1 and closing an open top side of the reservoir 22. In general, the drip tray 3 is shaped like a tray having a closed bottom 31 and a standing wall 32 projecting from the bottom 31 and delimiting a space above the bottom 31 for receiving and containing the fluid dripping from the basket 5. The fluid may be water which is obtained as steam condenses, and also fluid from the food which is present in the basket 5. At a top side of the bottom 31, at a central position, the drip tray 3 is provided with a tube 33 projecting from the bottom 31 in an upward direction, which will hereinafter be referred to as steam outlet 33. At the position of the tube 33, a hole 34 is present in the otherwise closed bottom 31 for letting through steam in an upward direction.

Furthermore, at a bottom side of the bottom 31, at a central position, the drip tray 3 is provided with another tube 10, namely a tube 10 projecting from the bottom 31 in a downward direction, which will hereinafter be referred to as separation tube 10. A height of the separation tube 10 is chosen such that when the drip tray 3 is in place on the base part 2, a free end 11 of the separation tube 10 contacts the bottom 24 of the reservoir 22, wherein the separation tube 10 has a function in supporting the drip tray 3 on the bottom 24 of the reservoir 22. Preferably, the separation tube 10 is an integral part of the drip tray 3, but that does not alter the fact that it is also possible for the separation tube 10 to be designed such as to be attachable to and detachable from the drip tray 3, or even to be a separate part.

The separation tube 10 defines a steam chamber 25 inside the reservoir 22 by separating a central part of the reservoir 22 from the rest of the reservoir 22. In particular, the separation tube 10 is designed such as to surround the heater 23, so that a relatively small space for containing water is formed around the heater 23 which serves as the steam chamber 25 during operation of the steaming device 1. It will be understood that continuously heating small quantities of water involves a more effective use of the heater 23 as compared to heating the entire content of the reservoir 22, wherein the steaming device 1 is capable of delivering steam much faster during a start-up phase. For the purpose of allowing water to flow from the reservoir 22 to the steam chamber 25, the free end 11 of the separation tube 10 is provided with notches as will be further elucidated later on.

The steaming device 1 may comprise an aroma infuser 4 for containing items for adding flavor and aroma to the food to be steamed, as shown in figure 3. A user can place herbs and spices in the aroma infuser 4, which is generally shaped like a tray having a bottom 41 which is at least partially permeable to steam. The aroma infuser 4 is positioned on top of the drip tray 3, particularly on top of the steam outlet 33. In this way, it is achieved that all steam which is produced during operation of the steaming device 1 passes through the aroma infuser 4 and the contents of the aroma infuser 4 before it reaches the food to be steamed, so that the taste and the aroma of the food is directly influenced by the interaction of the steam with the contents of the aroma infuser.

The standing wall 52 of the basket 5 can be made of a transparent material, such as a transparent plastic, for allowing a user of the steaming device 1 to watch and check the contents of the basket 5 during a steaming process. In general, the drip tray 3, the aroma infuser 4, the basket 5 and the cover 8 can be made of a plastic. Also, a number of elements of the base part 2 can be made of a plastic. Particularly, the reservoir 22 can be delimited by plastic walls.

The way in which the steaming device 1 works will be explained in the following. Before switching on the steaming device 1, a user of the device 1 makes some preparations. In the first place, the user takes care that the reservoir 22 is filled with a fresh quantity of water or possibly another fluid which is suitable to be used for steaming food, wherein the user can pour the fluid into the reservoir 22 through the filling port 21. When the reservoir 22 is filled to a sufficient extent, the user puts the drip tray 3 in place. In the process, the steam chamber 25 is formed inside the reservoir 22 as the free end 11 of the separation tube 10 touches the bottom 24 of the reservoir 22 and separates a small quantity of the water from the rest of the water contained inside the reservoir 22. Furthermore, the user fills the aroma infuser 4 with herbs and/or spices and places the aroma infuser 4 on top of the steam outlet 33. Also, the user fills the basket 5 with food to be steamed and places the basket 5 on top of the drip tray 3. Finally, the user covers the basket 5 by means of the cover 8. For sake of completeness, it is noted that the use of the aroma infuser 4 is not necessary for proper operation of the steaming device 1, so that a user of the device 1 may decide to omit the aroma infuser 4 if there is no need for adding extra flavor to the food to be steamed.

When the preparations are done, the user switches on the steaming device 1 and provides input to a controlling unit of the steaming device 1 by means of a control panel (not shown) arranged on the base part 2. For example, the user sets a duration of the steaming process. According to another possibility, the user enters information regarding the type of food which is present inside the basket 5. When the controlling unit is programmed such as to automatically choose optimal parameters of a steaming process with the type of food, particularly successive phases which are a combination of a certain temperature and a certain period of time, there is no need for the user to think of setting parameters himself/herself, so that mistakes are avoided.

As soon as the steaming device 1 is switched on, electric power is supplied to the heater 23 and the temperature of the water surrounding the heater 23 in the steam chamber 25 rises until the water starts to boil and steam is produced. The steam exits the steam chamber 25 through the steam outlet 33, flows through the aroma infuser 4 and flows further to the basket 5 while carrying the flavor and the aroma of the contents of the aroma infuser 4. Inside the basket 5, the food is heated under the influence of interaction with the steam and is cooked as a result thereof. In the process, the flavor and the aroma carried by the steam are absorbed by the food. The steam automatically flows in an upward direction and eventually reaches the cover 8, passing through the holes 53 in the bottom 51 of the basket 5. The steam chamber 25 is continuously refilled with water flowing from the reservoir 22 under the influence of gravity, on the basis of the principle of communicating vessels, through the notches which are present at the end 11 of the separation tube 10 touching the bottom 24 of the reservoir 22.

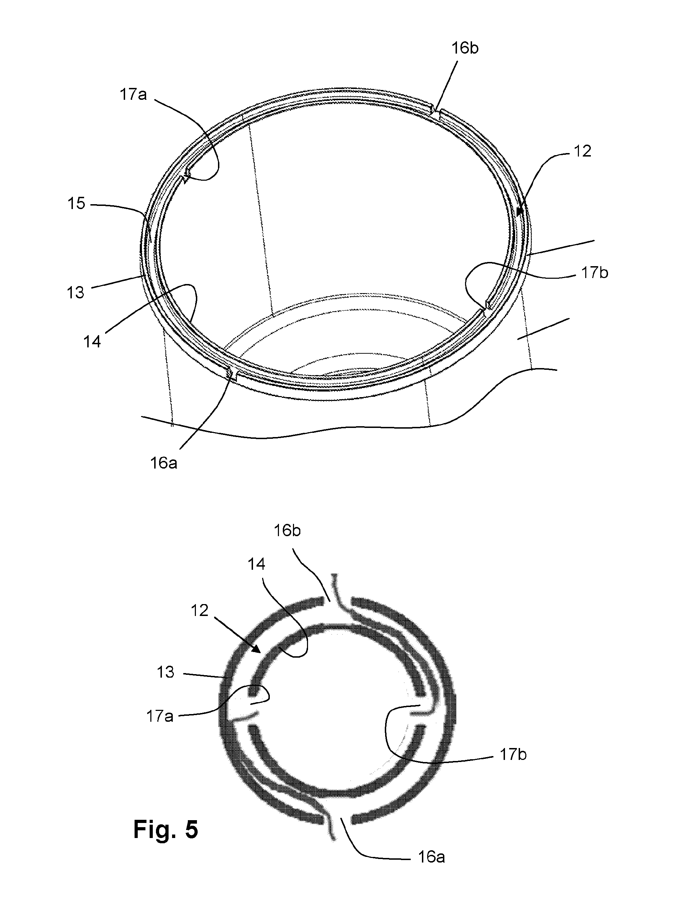

The steaming device 1 according to the present invention is capable of heating up very fast. In particular, the device 1 is capable of realizing an average steam production efficiency of least 0.2 gram per Joule of heat provided by the heater 23, at least during a period of 1.5 to 5 minutes after start-up of a steaming process to be performed by the device 1. The very effective use of the heat provided by the heater 23 during a start-up phase, which implies a relatively high steam production during this first phase of the operation of the steaming device 1, is achieved on the basis of a certain configuration of the free end 11 of the separation tube 10 as shown in figure 4.

As mentioned earlier, notches are arranged in the free end 11 of the separation tube 10 for the purpose of allowing water to flow from the reservoir 22 to the steam chamber 25. In the steaming device 1 according to the present invention, a recess 12 is present in the free end 11 of the separation tube 10, so that when the free end 11 of the separation tube 10 rests on the bottom 24 of the reservoir 22, a channel is formed, which is delimited by walls 13, 14 and a bottom 15 of the recess 12 and a part of the bottom 24 of the reservoir 22 which is covered by the separation tube 10, wherein the channel is accessible through the notches. In the example shown in figure 4, four notches 16a, 16b, 17a, 17b are present at the free end 11 of the separation tube 10, wherein two notches 16a, 16b are arranged in an outer wall 13 of the recess 12, and wherein two notches 17a, 17b are arranged in an inner wall 14 of the recess 12. In particular, the notches 16a, 16b which are arranged in the outer wall 13 of the recess 12, which will hereinafter be referred to as outer notches 16a, 16b, are arranged at another angular position with respect to a longitudinal axis 18 of the separation tube 10 than the notches 17a, 17b which are arranged in the inner wall 14 of the recess 12, and which will hereinafter be referred to as inner notches 17a, 17b. In this way, a labyrinth is obtained, which means that water flowing from outside of the separation tube 10 to inside of the separation tube 10 cannot pass the separation tube 10 in a straight line, but needs to follow a path between the walls 13, 14 of the recess 12 until an inner notch 17a, 17b is reached and exit from the recess 12 is possible. Figure 5 illustrates two examples of the path that is followed by the water when flowing from outside of the separation tube 10 to inside of the separation tube 10.

The labyrinth acts like a filter which is capable of letting through a smooth, steady flow of water, i.e. a flow of fresh water from the reservoir 22 to the steam chamber 25, while resisting a flow of water with high frequent changes, i.e. a flow of hot, boiling water from the steam chamber 25 to the reservoir 22. In this way, heat loss from the steam chamber 25 to the reservoir 22 is minimized, so that it is possible to realize the relatively high average steam production efficiency of at least 0.2 gram per Joule of heat provided by the heater 23, at least during a period of 1.5 to 5 minutes after initiation of the operation of the steaming device 1, as mentioned earlier. In this respect, it is noted that it is preferred for each of the channels which is present between the walls 13, 14 and the bottom 15 of the recess 12 and a part of the bottom 24 of the reservoir 22 which is covered by the separation tube 10 and which extends from an outer notch 16a, 16b to a nearest inner notch 17a, 17b to have a length which is at most 500 mm. Furthermore, it is preferred for an area of a cross-section of each of the channels as mentioned to be in a range of 0.5 to 50 mm². With these dimensions of the channels, optimal effect of the filter function is obtained.

Advantageously, the steaming device 1 comprises a circuit for controlling a power supply to the heater 23, wherein the circuit is capable of using input about actual conditions obtained from a temperature sensor 35. It is understood that such a way of controlling the power supply yields more accurate results of the temperature at which steaming processes are performed than when control would be performed without any feedback. According to the present invention, in order to guarantee relevant results of the measurements performed by the temperature sensor 35, it is important to choose a position of the temperature sensor 35 such as to be in a certain area. In particular, it is preferred for the temperature sensor 35 to be arranged in the at least one basket 5 or right underneath the basket 5, at a position between the steam outlet 33 and an extension thereof and the standing wall 52 of the basket 5 and an extension thereof.

In the shown example, the temperature sensor 35 is arranged on the base part 2 of the steaming device 1, at a top side of the base part 2, at a position close to the periphery of the base part 2. The drip tray 3 is provided with a hole 36 for letting through the temperature sensor 35 when the drip tray 3 is put in place on the base part 2. In this way, it is achieved that during a steaming process, the temperature sensor 35 is present in the drip tray 3, wherein the position of the temperature sensor 35 is a position which is close to the bottom 51 of the basket 5.

Furthermore, as mentioned in the foregoing, the position of the temperature sensor 35 is preferably chosen such as to be a position between the steam outlet 33 and an extension thereof and the standing wall 52 of the basket 5 and an extension thereof. In particular, an optimal distance between the position of the temperature sensor 35 and an outer wall 26 of the steam outlet 33 in a radial direction, i.e. a direction in a plane perpendicular to a geometric center axis 27 of the steam outlet 33, intersecting with both the geometric center axis 27 and the position of the temperature sensor 35, is found in a range of 0.5 to 0.9 of a distance between the standing wall 52 of the basket 5 and the outer wall 26 of the steam outlet 33, determined in the same direction.

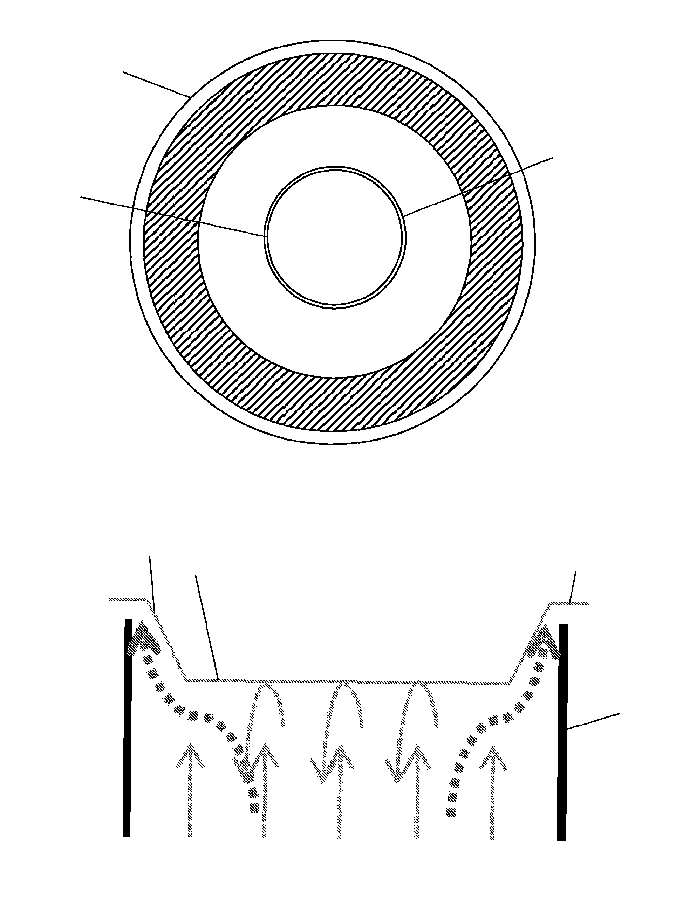

Figure 6 serves to illustrate the area associated with the range of the optimal position of a temperature sensor in the radial direction. To that end, the figure diagrammatically shows the outlines of the steam outlet 33 and the standing wall 52 of the basket 5, wherein the area is indicated as a hatched ring between the outlines as mentioned.

With the temperature sensor 35 being present inside the steaming device 1, it is possible to accurately set a temperature or various temperature phases during a steaming process. Needless to say that it is advantageous for the steaming device 1 to be equipped with some kind of timer as well when it is desired that temperature phases are realized, wherein the timer may be programmable by a user. In this respect, it is noted that for many types of food, it is advantageous to realize fast heating of the food during a start-up phase, to subject the food to a temperature lower than 100°C during a second phase, and to have a higher temperature again during one or more subsequent phases.

During a steaming process, a pressure is prevailing inside the steam outlet 33 which is higher than ambient pressure. Especially when the aroma infuser 4 which is present on top of the steam outlet 33 is stuffed with items and thereby causes a blocking effect on the flow of steam, the pressure can rise to unacceptable values if no measures are taken for enlarging an area through which steam is allowed to escape. According to the present invention, it is possible to actually take such measures while avoiding an undesirable situation in which part of the steam is allowed to bypass the aroma infuser 4 at all times. In particular, according to the present invention, it is possible for the aroma infuser 4 to be a separate part of the steaming device 1 which is not fixed to the steam outlet 33, but which is loosely positioned on top of the steam outlet 33 instead.

Figure 7 diagrammatically shows a top part of the steam outlet 33 and the aroma infuser 4 as positioned on top of the steam outlet 33. Furthermore, flows of steam are indicated by means of arrows. A series of straight arrows represents the steam flowing upward in the steam outlet 33, and a series of curved arrows represents the steam being blocked on its way out of the steam outlet 33 by the aroma infuser 4. Figure 7 shows the aroma infuser 4 in a state in which it is lifted from the steam outlet 33 under the influence of the steam, wherein a ring-shaped gap is obtained between a top side of the steam outlet 33 and the aroma infuser 4 through which steam can escape, as indicated by two relatively thick arrows. Consequently, when a high pressure is prevailing inside the steam outlet 33, a situation is obtained in which the steam is allowed to escape from the steam outlet 33 so that the pressure can decrease again. Thus, the present invention provides a way of creating an escape of steam without allowing the steam to bypass the aroma infuser 4 under all circumstances. In fact, the steam is only allowed to freely escape from the steam outlet 33 in the very situations in which this is necessary for reducing the pressure to an acceptable level. In a practical embodiment, the aroma infuser 4 has a peripheral rim 42 which is suitable for supporting the aroma infuser 4 on the steam outlet 33 with minimum friction force, so that the steam is not hindered in lifting the aroma infuser 4 from the steam outlet 33 when the pressure gets higher than an acceptable value.

Besides a bypass of steam, another factor which could reduce the effectiveness of the use of the aroma infuser 4 is the fact that fluid drips down from the basket 5 during a steaming process. The reason is that such fluid may cause the contents of the aroma infuser 4 to get wet, as a result of which the process in which steam absorbs flavor and aroma from these contents may be disturbed. Also, the blocking influence of the aroma infuser 4 on the steam is enhanced when the contents of the aroma infuser 4 are wetted. In order to avoid such a situation, the present invention proposes measures which are aimed at keeping the fluid dripping down from the basket 5 away from the aroma infuser 4 without hindering an upward flow of steam. An additional advantage of such measure can be that fluid is also not allowed to enter the steam outlet 33, so that contamination of the water which present inside the steam chamber 25 and the reservoir 22 is avoided and foaming in the water as contained by the reservoir 22 cannot occur.

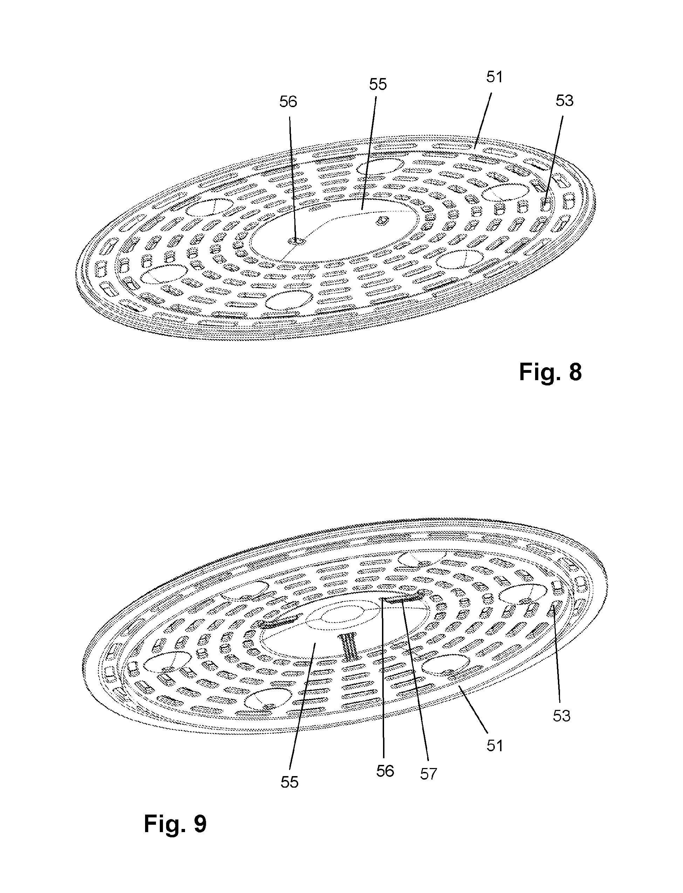

According to the present invention, the measure indicated in the preceding paragraph involves having a dome-shaped area 55 of the bottom 51 of the basket 5, as can be seen in the views of the bottom 51 as shown in figures 8 and 9. In particular, the dome-shaped area 55 is oriented such that a concave side of the area 55 is at a bottom side. Furthermore, the dome-shaped area 55 is large enough for covering the entire aroma infuser 4 and the underlying steam outlet 33. Any fluid on the dome-shaped area 55 will automatically flow to the periphery of the dome-shaped area 55 under the influence of gravity, as a result of which it is not possible for the fluid to reach the aroma infuser 4 or the steam outlet 33.

Advantageously, in order to avoid too much hindrance of the upward flow of steam, the dome-shaped area 55 is provided with a number of holes 56. In order to guide fluid which happens to be present at one of holes 56 to the periphery of the dome-shaped area 55, ribs 57 are provided, wherein each of the ribs 57 is associated with a hole 56 and extends from the hole 56 to the periphery of the dome-shaped area 55, at the bottom side of the area 55. On the basis of the presence of the ribs 57, fluid which is present at a hole 56 does not fall down through the hole 56, but is guided by the rib 57 extending from the hole under the influence of gravity and adhesive forces. The ribs 57 may comprise two edges extending alongside each other, whereby it can be achieved that the fluid is also held on the ribs 57 under the influence of another type of forces, namely capillary forces.

For sake of completeness, it is noted that when the steaming device 1 comes with more than one basket 5, 6, 7, it is preferred if at least a basket 5 which is intended to be placed directly on top of the drip tray 3 is provided with the dome-shaped area 55 of the bottom 51 as described in the foregoing. It is possible for the baskets 5, 6, 7 to be identical, wherein each of the baskets 5, 6, 7 has a dome-shaped area 55 in the bottom 51, 61, 71, but this is not necessary within the framework of the present invention.

Besides the possibility that the contents of the aroma infuser 4 get wet as a result of interaction with fluid at a top side of the aroma infuser 4, there is also a possibility that the contents get wet as a result of interaction with water splashing from the quantity of boiling water which is present in the steam chamber 25, through the steam outlet 33. In order to remove this possibility, the present invention proposes to have an anti-splashing unit 37 in the steam outlet 33, which is capable of blocking water splashing upward while allowing steam to pass at the same time.

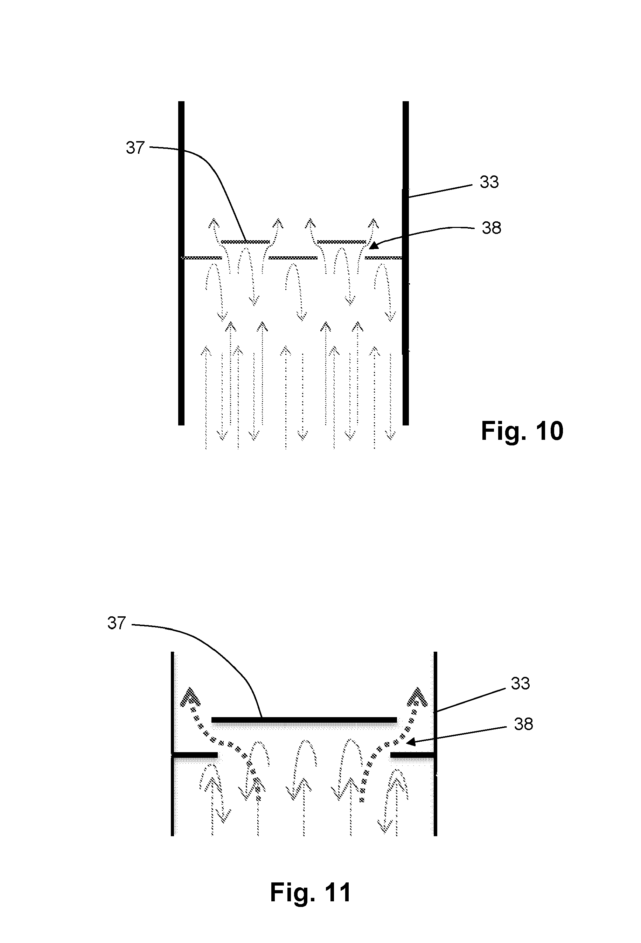

A first variant of an anti-splashing unit 37 as mentioned is diagrammatically shown in figure 10, and a second variant of the anti-splashing unit 37 is diagrammatically shown in figure 11, wherein flows of water and steam are indicated by means of arrows. In general, the anti-splashing unit 37 can be denoted as being a stepped maze with holes 38, wherein a few stepped horizontal layers block direct splashing, break bubbles of air and let steam through without letting water through as well. The anti-splashing unit 37 can be made in plastic without a need of having a difficult tool setup or loose parts. As indicated by the arrows in figures 10 and 11, when the anti-splashing unit 37 is present in the steam outlet 33, water moving upward and hitting the anti-splashing unit 37 is forced to move downward again. Even when the water passes a bottom layer of the anti-splashing unit 37, it will be blocked by a layer at a higher level. A flow of steam, however, is capable of finding a way through the holes 38 in the various layers. Hence, an effective way of preventing the aroma infuser 4 from becoming wet is realized. Furthermore, it is noted that application of an anti-splashing unit 37 also offers advantages when the aroma infuser 4 is not used during a steaming process, in view of the fact that without the anti-splashing unit 37 being present, the drip tray 3 would be filled to a maximum extent earlier as it would also be filled with water splashing through the steam outlet 33, resulting in an early water refill warning.

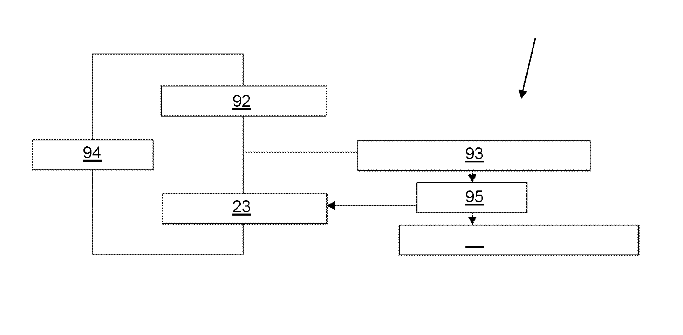

Figure 12 diagrammatically shows elements of a circuit 90 for controlling a refill indicator 91 of the steaming device 1. In general, detection of an empty or nearly empty state of the reservoir 22 is a convenient option for a user of the steaming device 1. Performing the detecting by means of a float or the like is costly and sensitive to pollution. According to the invention, another way of detecting is applied, wherein use is made of a thermostat 92 associated with the heater 23. In particular, a power detection circuit 93 is provided, which serves for detecting whether the heater 23 is powered, or not. A situation in which the power supply 94 to the heater 23 is stopped can be caused by a controller 95 providing a signal that the power supply should be off or can be caused by the fact that the thermostat 92 is in an opened state. In the latter case, when the signal provided by the controller 95 is a signal that the power supply should be on, the controller 95 can take the information provided by the detection unit 93 as an indication that the heater 23 overheats due to lack of water surrounding it. In such a case, a refill signal can be triggered to the user by means of the refill indicator 91 which is arranged such as to be controlled by the controller 95. Advantages of the method for indicating a need for refilling the reservoir 22 to a user of the steaming device 1 as described in the foregoing involve low costs and high reliability. Nevertheless, it is possible within the framework of the present invention that another arrangement for controlling a refill indicator 91 is present in the steaming device 1.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that in this text, the terms "water" and "fluid" are used in respect of liquids which can be present in the steaming device 1. The use of these terms should not be understood such as to mean that the present invention is restricted to the use of a certain type of liquid. Particularly, the term "water" should be interpreted in a broad sense, not only in the meaning of pure water, but also in the meaning of water-based liquids.

In the example of a steaming device 1 according to the present invention shown in figure 2, the device 1 comprises three baskets 5, 6, 7 which are intended to be stacked on top of each other. That does not alter the fact that the number of baskets 5, 6, 7 can be chosen freely within the framework of the present invention, as mentioned earlier. Furthermore, when two or more baskets 5, 6, 7 are used, it is not necessary that the baskets 5, 6, 7 are intended to be positioned at different levels. In other words, in such a case, it is also possible for the baskets 5, 6, 7 to be intended to be positioned in a side-by-side configuration at one and the same level on the base part 2.

Various aspects of the present invention can be regarded as being independent from each other, even though they are described in the context of the same steaming device 1. In this respect, in the first place, it is noted that in general, the present invention relates to a device 1 for steaming food, which comprises a base part 2 and at least one basket 5, 6, 7 which is intended to be positioned above the base part 2 in a normal orientation of the device 1, wherein the at least one basket 5, 6, 7 has a bottom 51, 61, 71 provided with holes 53 for letting through steam and a standing wall 52, 62, 72 projecting from the bottom 51, 61, 71 and delimiting a space above the bottom 51, 61, 71 for receiving and containing food to be steamed, wherein the base part 2 comprises a steam chamber 25 for containing water to be converted into steam and heating means 23 associated with the steam chamber 25 for heating water which is inside the steam chamber 25.

According to a first aspect of the present invention, the device 1 for steaming food also comprises a reservoir 22 for containing water to be supplied to the steam chamber 25, which is in fluid communication with the steam chamber 25 through at least one channel, wherein the channel is configured to allow for a flow of water from the reservoir 22 to the steam chamber 25 while counteracting a flow of water from the steam chamber 25 to the reservoir 22 on the basis of differences in the nature of the respective flows, wherein the base part 2 further comprises a separation tube 10 for defining the steam chamber 25 inside the reservoir 22, wherein the separation tube 10 contacts a bottom 24 of the reservoir 22 with a first end 11 when the separation tube 10 is in place in the base part 2, and wherein the first end 11 of the separation tube 10 is provided with a recess 12 for forming the channel between the reservoir 22 and the steam chamber 25, which channel is delimited by walls 13, 14 and a bottom 15 of the recess 12 and a part of the bottom 24 of the reservoir 22 which is covered by the separation tube 10.

According to a second aspect of the present invention, the device 1 for steaming food also comprises a reservoir 22 for containing water to be supplied to the steam chamber 25, which is in fluid communication with the steam chamber 25, wherein the base part 2 further comprises a separation tube 10 for defining the steam chamber 25 inside the reservoir 22, and wherein an end 11 of the separation tube 10 for contacting a bottom 24 of the reservoir 22 is provided with a recess 12 and notches 16a, 16b, 17a, 17b for allowing access to the recess 12 from outside of the separation tube 10 when the end 11 of the separation tube 10 contacts the bottom 24 of the reservoir 22, wherein notches 16a, 16b in an outer circumference of the end 11 of the separation tube 10 are arranged at another angular position with respect to a longitudinal axis 18 of the separation tube 10 than notches 17a, 17b in an inner circumference of the end 11 of the separation tube 10.

According to a third aspect of the present invention, the device 1 for steaming food is capable of realizing an average steam production efficiency of at least 0.2 gram per Joule of heat provided by the heating means 23, at least during a period of 1.5 to 5 minutes after start-up of a steaming process to be performed by the device 1.

According to a fourth aspect of the present invention, the device 1 for steaming food also comprises a reservoir 22 for containing water to be supplied to the steam chamber 25, which is in fluid communication with the steam chamber 25 through at least one channel, wherein the channel is configured to allow water to flow through steadily while resisting a flow of water with high frequent changes.

According to a fifth aspect of the present invention, the device 1 for steaming food also comprises a reservoir 22 for containing water to be supplied to the steam chamber 25, which is in fluid communication with the steam chamber 25 through at least one channel, wherein an area of a cross-section of the channel is in a range of 0.5 to 50 mm², and wherein a length of the channel is at most 500 mm.

According to a sixth aspect of the present invention, the device 1 for steaming food also comprises a reservoir 22 for containing water to be supplied to the steam chamber 25, which is in fluid communication with the steam chamber 25, wherein the base part 2 further comprises a drip tray 3 for receiving fluid from the at least one basket 5, 6, 7 during operation of the device 1 and for closing an open top side of the reservoir 22, and also a separation tube 10 for defining the steam chamber 25 inside the reservoir 22, and wherein the separation tube 10 contacts a bottom 24 of the reservoir 22 with a first end 11, contacts the drip tray 3 with a second end, and supports the drip tray 3 on the bottom 24 of the reservoir 22 when the separation tube 10 and the drip tray 3 are in place in the base part 2.

According to a seventh aspect of the present invention, the device 1 for steaming food further comprises a circuit for controlling a power supply to the heating means 23, wherein the circuit comprises a temperature sensor 35 which is arranged at a distance with respect to a first imaginary ring-shaped plane defined by an outer wall 26 of a steam outlet 33 of the steam chamber 25 and an extension thereof in a range of 0.5 to 0.9 of a total distance between the first imaginary ring-shaped plane and a second imaginary ring-shaped plane defined by the standing wall 52 of the at least one basket 5, 6, 7 and an extension thereof, measured along an imaginary line intersecting both a geometric center axis 27 of the steam outlet 33 and the position of the temperature sensor 35, in a plane perpendicular to the geometric center axis 27 of the steam outlet 33. The device 1 for steaming food may also comprise a reservoir 22 for containing water to be supplied to the steam chamber 25, which is in fluid communication with the steam chamber 25, wherein the base part 2 further comprises a drip tray 3 for receiving fluid from the at least one basket 5, 6, 7 during operation of the device 1 and for closing an open top side of the reservoir 22, and wherein the temperature sensor 35 is at a position in the drip tray 3.

According to an eighth aspect of the present invention, the device 1 for steaming food further comprises a circuit for controlling a power supply to the heating means 23, wherein the circuit is programmed to realize at least three temperature phases during operation of the device 1, wherein a temperature associated with an intermediate temperature phase is lower than temperatures associated with a start temperature phase and a final temperature phase.

According to a ninth aspect of the present invention, the device 1 for steaming food further comprises a circuit for controlling a power supply to the heating means 23, wherein the circuit is programmed to realize four temperature phases, wherein, in a first phase, a temperature is set in a range between 80°C and 100°C, during a time in a range between 2 and 10 minutes, wherein, in a second phase, a temperature is set in a range between 50°C and 90°C, during a time in a range between 0 and 120 minutes, wherein, in a third phase, a temperature is set in a range between 90°C and 100°C, during a time in a range between 0 and 120 minutes, and wherein, in a fourth phase, a temperature is set in a range between 60°C and 100°C, during a time in a range between 0 and 60 minutes.

According to a tenth aspect of the present invention, the device 1 for steaming food further comprises a tray 4 for containing items for adding flavor and aroma to the food to be steamed, which has a bottom 41 that is at least partially permeable to steam, and which is intended to be positioned below the at least one basket 5, 6, 7 in the normal orientation of the device 1, in a path followed by the steam from the steam chamber 25 to the basket 5, 6, 7 during operation of the device 1, wherein the tray 4 is loosely positioned on top of a steam outlet 33 of the steam chamber 25 to the basket 5, 6, 7.

According to an eleventh aspect of the present invention, the device 1 for steaming food further comprises a tray 4 for containing items for adding flavor and aroma to the food to be steamed, which has a bottom 41 that is at least partially permeable to steam, and which is intended to be positioned below the at least one basket 5, 6, 7 in the normal orientation of the device 1, in a path followed by the steam from the steam chamber 25 to the basket 5, 6, 7 during operation of the device 1, wherein the bottom 51, 61, 71 of the basket 5, 6, 7 comprises a dome-shaped area 55 at a position for covering the tray 4 with a concave side facing the tray 4, and wherein holes 56 for letting through steam are arranged in the dome-shaped area 55.

According to a twelfth aspect of the present invention, the device 1 for steaming food further comprises a unit 37 which is arranged in a steam outlet 33 of the steam chamber 25 to the at least one basket 5, 6, 7, and which comprises at least two layers with holes 38 at mutually different positions as seen in a direction of the path followed by the steam from the steam chamber 25 to the basket 5, 6, 7 during operation of the device 1, through the steam outlet 33.

According to a thirteenth aspect of the present invention, the device 1 for steaming food further comprises a resettable thermal cut off element 92 for terminating a power supply to the heating means 23 in case a temperature of the heating means 23 is above a predetermined maximum, means 93 for detecting whether the heating means 23 are powered or not, a circuit 95 for controlling a power supply 94 to the heating means 23 and for receiving information from the detecting means 93, and a refill indicator 91, wherein the controlling circuit 95 is programmed to activate the refill indicator 91 when being in a state for realizing a power supply to the heating means 23 as soon as the information provided by the detecting means 93 indicate that the heating means 23 are nonetheless not powered. It is noted that this aspect of the present invention is also applicable in the context of other devices comprising heating means which are used for heating a fluid, such as kettles and coffee makers.

As mentioned in the foregoing, the mere fact that certain measures are recited in mutually different dependent claims does not indicate that a combination of these measures cannot be used to advantage. In this respect, referring to the various aspects of the present invention, it is noted that the fourth aspect may be combined with the third aspect; the fifth aspect may be combined with the third aspect and the fourth aspect, respectively; the sixth aspect may be combined with the third aspect, the fourth aspect, and the fifth aspect, respectively; the seventh aspect may be combined with the second aspect, the third aspect, the fourth aspect, the fifth aspect, and the sixth aspect, respectively; the tenth aspect may be combined with the second aspect, the third aspect, the fourth aspect, the fifth aspect, the sixth aspect, the seventh aspect, the eighth aspect, and the ninth aspect, respectively; the twelfth aspect may be combined with the eleventh aspect; and the thirteenth aspect may be combined with the second aspect, the third aspect, the fourth aspect, the fifth aspect, the sixth aspect, the seventh aspect, the eighth aspect, the ninth aspect, the tenth aspect, the eleventh aspect, and the twelfth aspect, respectively.

## Claims

1. Device (1) for steaming food, comprising a base part (2) and at least one basket (5, 6, 7) which is intended to be positioned above the base part (2) in a normal orientation of the device (1), wherein the at least one basket (5, 6, 7) has a bottom (51,61, 71) provided with holes (53) for letting through steam and a standing wall (52, 62, 72) projecting from the bottom (51, 61, 71) and delimiting a space above the bottom (51, 61, 71) for receiving and containing food to be steamed, wherein the base part (2) comprises a steam chamber (25) for containing water to be converted into steam and heating means (23) associated with the steam chamber (25) for heating water which is inside the steam chamber (25), and also a reservoir (22) for containing water to be supplied to the steam chamber (25), which is in fluid communication with the steam chamber (25) through at least one channel, wherein the channel is configured to allow for a flow of water from the reservoir (22) to the steam chamber (25) while counteracting a flow of water from the steam chamber (25) to the reservoir (22) on the basis of differences in the nature of the respective flows,
**characterized in that** said
base part (2) further comprises a separation tube (10) for defining the steam chamber (25) inside the reservoir (22), wherein the separation tube (10) contacts a bottom (24) of the reservoir (22) with a first end (11) when the separation tube (10) is in place in the base part (2), and wherein the first end (11) of the separation tube (10) is provided with a recess (12) for forming the channel between the reservoir (22) and the steam chamber (25), which channel is delimited by walls (13, 14) and a bottom (15) of the recess (12) and a part of the bottom (24) of the reservoir (22) which is covered by the separation tube (10).

2. Device (1) according to claim 1, wherein the first end (11) of the separation tube (10) is further provided with notches (16a, 16b, 17a, 17b) for allowing access to the recess (12) from outside of the separation tube (10) when the first end (11) of the separation tube (10) contacts the bottom (24) of the reservoir (22), and wherein notches (16a, 16b) in an outer circumference of the first end (11) of the separation tube (10) are arranged at another angular position with respect to a longitudinal axis (18) of the separation tube (10) than notches (17a, 17b) in an inner circumference of the first end (11) of the separation tube (10).

3. Device (1) according to claim 1, wherein both an inner circumference and an outer circumference of the separation tube (10) are circular, and wherein the recess (12) is ring-shaped.

4. Device (1) according to claim 1, wherein the device (1) is capable of realizing an average steam production efficiency of at least 0.2 gram per Joule of heat provided by the heating means (23), at least during a period of 1.5 to 5 minutes after start-up of a steaming process to be performed by the device (1).

5. Device (1) for steaming food according to claim 1, wherein the channel between the reservoir (22) and the steam chamber (25) is configured to allow water to flow through steadily while resisting a flow of water with high frequent changes.

6. Device (1) for steaming food according to claim 1, wherein an area of a cross-section of the channel between the reservoir (22) and the steam chamber (25) is in a range of 0.5 to 50 mm², and wherein a length of the channel is at most 500 mm.

7. Device (1) for steaming food according to claim 1, wherein the base part (2) further comprises a drip tray (3) for receiving fluid from the at least one basket (5, 6, 7) during operation of the device (1) and for closing an open top side of the reservoir (22), and wherein the separation tube (10) contacts the drip tray (3) with a second end, and supports the drip tray (3) on the bottom (24) of the reservoir (22) when the separation tube (10) and the drip tray (3) are in place in the base part (2).

8. Device (1) for steaming food according to claim 7, wherein the separation tube (10) is an integral part of the drip tray (3).

9. Device (1) for steaming food according to claim 1, further comprising a circuit for controlling a power supply to the heating means (23), wherein the circuit comprises a temperature sensor (35) which is arranged at a distance with respect to a first imaginary ring-shaped plane defined by an outer wall (26) of a steam outlet (33) of the steam chamber (25) and an extension thereof in a range of 0.5 to 0.9 of a total distance between the first imaginary ring-shaped plane and a second imaginary ring-shaped plane defined by the standing wall (52, 62, 72) of the at least one basket (5, 6, 7) and an extension thereof, measured along an imaginary line intersecting both a geometric center axis (27) of the steam outlet (33) and the position of the temperature sensor (35), in a plane perpendicular to the geometric center axis (27) of the steam outlet (33).

10. Device (1) for steaming food according to claim 9, wherein the base part (2) further comprises a drip tray (3) for receiving fluid from the at least one basket (5, 6, 7) during operation of the device (1) and for closing an open top side of the reservoir (22), and wherein the temperature sensor (35) is at a position in the drip tray (3).

11. Device (1) for steaming food according to claim 9, wherein the controlling circuit is programmed to realize at least three temperature phases during operation of the device (1), wherein a temperature associated with an intermediate temperature phase is lower than temperatures associated with a start temperature phase and a final temperature phase.

12. Device (1) for steaming food according to claim 9, wherein the controlling unit is programmed to realize four temperature phases, wherein, in a first phase, a temperature is set in a range between 80°C and 100°C, during a time in a range between 2 and 10 minutes, wherein, in a second phase, a temperature is set in a range between 50°C and 90°C, during a time in a range between 0 and 120 minutes, wherein, in a third phase, a temperature is set in a range between 90°C and 100°C, during a time in a range between 0 and 120 minutes, and wherein, in a fourth phase, a temperature is set in a range between 60°C and 100°C, during a time in a range between 0 and 60 minutes.

13. Device (1) for steaming food according to claim 1, further comprising a tray (4) for containing items for adding flavor and aroma to the food to be steamed, which has a bottom (41) that is at least partially permeable to steam, and which is intended to be positioned below the at least one basket (5, 6, 7) in the normal orientation of the device (1), in a path followed by the steam from the steam chamber (25) to the basket (5, 6, 7) during operation of the device (1), wherein the tray (4) is loosely positioned on top of a steam outlet (33) of the steam chamber (25) to the basket (5, 6, 7).

14. Device (1) for steaming food according to claim 13, wherein the bottom (51, 61, 71) of the at least one basket (5, 6, 7) comprises a dome-shaped area (55) at a position for covering the tray (4) with a concave side facing the tray (4), and wherein holes (56) for letting through steam are arranged in the dome-shaped area (55).

15. Device (1) for steaming food according to claim 13, wherein a unit (37) comprising at least two layers with holes (38) at mutually different positions as seen in a direction of the path followed by the steam from the steam chamber (25) to the at least one basket (5, 6, 7) during operation of the device (1) is arranged in the steam outlet (33) of the steam chamber (25).

## Patentansprüche

1. Vorrichtung (1) zum Dampfgaren von Lebensmitteln, umfassend ein Basisteil (2) und mindestens einen Korb (5, 6, 7), der oberhalb des Basisteils (2) in einer normalen Ausrichtung der Vorrichtung (1) zu positionieren ist, wobei der mindestens eine Korb (5, 6, 7) einen mit Löchern (53) versehenen Boden (51, 61, 71) zum Durchlassen von Dampf sowie eine von dem Boden (51, 61, 71) hervorragende und einen Raum oberhalb des Bodens (51, 61, 71) begrenzende, stehende Wand (52, 62, 72) zur Aufnahme und Unterbringung von zu garenden Lebensmitteln aufweist, wobei das Basisteil (2) eine Dampfkammer (25) zur Aufnahme von in Dampf umzuwandelndes Wasser sowie mit der Dampfkammer (25) verbundene Heizmittel (23) zur Erhitzung von sich innerhalb der Dampfkammer (25) befindendem Wasser sowie ebenfalls ein Reservoir (22) zur Aufnahme von der Dampfkammer (25) zuzuführendem Wasser umfasst, das durch mindestens einen Kanal in Flüssigkeitsverbindung mit der Dampfkammer (25) steht, wobei der Kanal so ausgeführt ist, dass er einen Wasserdurchfluss von dem Reservoir (22) zu der Dampfkammer (25) ermöglicht und dabei einem Wasserdurchfluss von der Dampfkammer (25) zu dem Reservoir (22) aufgrund von Unterschieden in der Art des jeweiligen Durchflusses entgegenwirkt,
**dadurch gekennzeichnet, dass**
das Basisteil (2) weiterhin ein Trennrohr (10) umfasst, um die Dampfkammer (25) innerhalb des Reservoirs (22) zu definieren, wobei das Trennrohr (10) mit einem ersten Ende (11) mit einem Boden (24) des Reservoirs (22) in Kontakt kommt, wenn sich das Trennrohr (10) an korrekter Stelle in dem Basisteil (2) befindet, und wobei das erste Ende (11) des Trennrohres (10) mit einer Vertiefung (12) versehen ist, um den Kanal zwischen dem Reservoir (22) und der Dampfkammer (25) auszubilden, wobei der Kanal durch Wände (13, 14) und einen Boden (15) der Vertiefung (12) sowie einen Teil des Bodens (24) des Reservoirs (22), der von dem Trennrohr (10) bedeckt ist, begrenzt ist.

2. Vorrichtung (1) nach Anspruch 1, wobei das erste Ende (11) des Trennrohres (10) weiterhin mit Kerben (16a, 16b, 17a, 17b) versehen ist, um einen Zugang zu der Vertiefung (12) von außerhalb des Trennrohres (10) zu ermöglichen, wenn das erste Ende (11) des Trennrohres (10) mit dem Boden (24) des Reservoirs (22) in Kontakt kommt, und wobei Kerben (16a, 16b) in einem äußeren Umfang des ersten Endes (11) des Trennrohres (10) in einer anderen Winkelposition gegenüber einer Längsachse (18) des Trennrohres (10) als Kerben (17a, 17b) in einem inneren Umfang des ersten Endes (11) des Trennrohres (10) angeordnet sind.

3. Vorrichtung (1) nach Anspruch 1, wobei sowohl ein innerer Umfang als auch ein äußerer Umfang des Trennrohres (10) kreisförmig ist, und wobei die Vertiefung (12) ringförmig ist.

4. Vorrichtung (1) nach Anspruch 1, wobei die Vorrichtung (1) imstande ist, eine durchschnittliche Dampferzeugungseffizienz von mindestens 0,2 Gramm je Joule an Wärme, die durch die Heizmittel (23) zumindest während einer Periode von 1,5 bis 5 Minuten nach Beginn eines von der Vorrichtung (1) durchzuführenden Dampfvorgangs bereitgestellt wird, zu realisieren.

5. Vorrichtung (1) zum Dampfgaren von Lebensmitteln nach Anspruch 1, wobei der Kanal zwischen dem Reservoir (22) und der Dampfkammer (25) so ausgeführt ist, dass er den stetigen Wasserdurchfluss ermöglicht und dabei einem Wasserdurchfluss mit hochfrequenten Änderungen entgegenwirkt.

6. Vorrichtung (1) zum Dampfgaren von Lebensmitteln nach Anspruch 1, wobei ein Bereich eines Querschnitts des Kanals zwischen dem Reservoir (22) und der Dampfkammer (25) in einem Bereich von 0,5 bis 50 mm² liegt, und wobei eine Länge des Kanals maximal 500 mm beträgt.

7. Vorrichtung (1) zum Dampfgaren von Lebensmitteln nach Anspruch 1, wobei das Basisteil (2) weiterhin eine Auffangvorrichtung (3) umfasst, um Flüssigkeit aus dem mindestens einen Korb (5, 6, 7) bei Betrieb der Vorrichtung (1) aufzunehmen und eine offene obere Seite des Reservoirs (22) zu schließen, und wobei das Trennrohr (10) mit einem zweiten Ende mit der Auffangvorrichtung (3) in Kontakt kommt und die Auffangvorrichtung (3) auf der Unterseite (24) des Reservoirs (22) trägt, wenn das Trennrohr (10) und die Auffangvorrichtung (3) in dem Basisteil (2) vorhanden sind.

8. Vorrichtung (1) zum Dampfgaren von Lebensmitteln nach Anspruch 7, wobei das Trennrohr (10) ein integraler Bestandteil der Auffangvorrichtung (3) ist.

9. Vorrichtung (1) zum Dampfgaren von Lebensmitteln nach Anspruch 1, die weiterhin eine Schaltung zur Regelung einer Energiezufuhr zu den Heizmitteln (23) umfasst, wobei die Schaltung einen Temperatursensor (35) umfasst, der in einem Abstand gegenüber einer ersten imaginären, ringförmigen Ebene angeordnet ist, die durch eine äußere Wand (26) eines Dampfauslasses (33) der Dampfkammer (25) und eine Erweiterung derselben in einem Bereich von 0,5 bis 0,9 eines Gesamtabstands zwischen der ersten imaginären, ringförmigen Ebene und einer durch die stehende Wand (52, 62, 72) des mindestens einen Korbes (5, 6, 7) und einer Erweiterung derselben definierten zweiten imaginären, ringförmigen Ebene, gemessen entlang einer imaginären Linie, die sowohl eine geometrische Mittelachse (27) des Dampfauslasses (33) als auch die Position des Temperatursensors (35) in einer Ebene senkrecht zu der geometrischen Mittelachse (27) des Dampfauslasses (33) schneidet, definiert wird.

10. Vorrichtung (1) zum Dampfgaren von Lebensmitteln nach Anspruch 9, wobei das Basisteil (2) weiterhin eine Auffangvorrichtung (3) umfasst, um Flüssigkeit aus dem mindestens einen Korb (5, 6, 7) bei Betrieb der Vorrichtung (1) aufzunehmen und eine offene obere Seite des Reservoirs (22) zu schließen, und wobei sich der Temperatursensor (35) in einer Position in der Auffangvorrichtung (3) befindet.

11. Vorrichtung (1) zum Dampfgaren von Lebensmitteln nach Anspruch 9, wobei der Regelkreis so programmiert ist, dass er während des Betriebs der Vorrichtung (1) mindestens drei Temperaturphasen realisiert, wobei eine einer Zwischentemperaturphase zugeordnete Temperatur niedriger als einer Anfangstemperaturphase und einer Endtemperatur zugeordnete Temperaturen ist.

12. Vorrichtung (1) zum Dampfgaren von Lebensmitteln nach Anspruch 9, wobei der Regelkreis so programmiert ist, dass er vier Temperaturphasen realisiert, wobei in einer ersten Phase während eines Zeitraumes in einem Bereich zwischen 2 und 10 Minuten eine Temperatur in einem Bereich zwischen 80°C und 100°C eingestellt ist, wobei in einer zweiten Phase während eines Zeitraumes in einem Bereich zwischen 0 und 120 Minuten eine Temperatur in einem Bereich zwischen 50°C und 90°C eingestellt ist, wobei in einer dritten Phase während eines Zeitraume in einem Bereich zwischen 0 und 120 Minuten eine Temperatur in einem Bereich zwischen 90°C und 100°C eingestellt ist, und wobei in einer vierten Phase während eines Zeitraumes in einem Bereich zwischen 0 und 60 Minuten eine Temperatur in einem Bereich zwischen 60°C und 100°C eingestellt ist.

13. Vorrichtung (1) zum Dampfgaren von Lebensmitteln nach Anspruch 1, die weiterhin eine Ablage (4) zur Aufnahme von Gegenständen zum Hinzufügen von Gewürzen und Aroma zu den zu garenden Lebensmitteln umfasst, die einen Boden (41) aufweist, der zumindest teilweise dampfdurchlässig ist, und die bei Betrieb der Vorrichtung (1) unterhalb des mindestens einen Korbes (5, 6, 7) in der normalen Ausrichtung der Vorrichtung (1), in einem Weg, gefolgt von dem Dampf von der Dampfkammer (25) zu dem Korb (5, 6, 7), zu positionieren ist, wobei die Ablage (4) auf der Oberseite eines Dampfauslasses (33) der Dampfkammer (25) zu dem Korb (5, 6, 7) lose positioniert ist.

14. Vorrichtung (1) zum Dampfgaren von Lebensmitteln nach Anspruch 13, wobei der Boden (51, 61, 71) des mindestens einen Korbes (5, 6, 7) an einer Stelle einen kuppelförmigen Bereich (55) zur Abdeckung der Ablage (4) umfasst, wobei eine konkave Seite der Ablage (4) zugewandt ist, und wobei Löcher (56) zum Dampfdurchlass in dem kuppelförmigen Bereich (55) angeordnet sind.

15. Vorrichtung (1) zum Dampfgaren von Lebensmitteln nach Anspruch 13, wobei eine Einheit (37) mit mindestens zwei Schichten mit Löchern (38) an voneinander verschiedenen Stellen, gesehen in einer Richtung des Weges, dem während des Betriebs der Vorrichtung (1) der Dampf von der Dampfkammer (25) zu dem mindestens einen Korb (5, 6, 7) folgt, in dem Dampfauslass (33) der Dampfkammer (25) angeordnet ist.

## Revendications

1. Dispositif (1) pour cuire à la vapeur des aliments, comprenant une partie de base (2) et au moins un panier (5, 6, 7) qui est destiné à être positionné au-dessus de la partie de base (2) dans une orientation normale du dispositif (1), dans lequel le au moins un panier (5, 6, 7) a un fond (51,61,71) pourvu de trous (53) pour laisser passer la vapeur d'eau et une paroi verticale (52, 62, 72) faisant saillie du fond (51, 61, 71) et délimitant un espace au-dessus du fond (51, 61, 71) pour recevoir et confiner les aliments à faire cuire à la vapeur d'eau, dans lequel la partie de base (2) comprend une chambre à vapeur d'eau (25) pour contenir l'eau à convertir en vapeur d'eau et des moyens de chauffage (23) associés à la chambre à vapeur d'eau (25) pour chauffer l'eau qui se trouve à l'intérieur de la chambre à vapeur d'eau (25), et également un réservoir (22) pour contenir l'eau à fournir à la chambre à vapeur d'eau (25), qui est en communication fluidique avec la chambre à vapeur d'eau (25) à travers au moins un canal, dans lequel le canal est configuré pour permettre en écoulement d'eau du réservoir (22) à la chambre à vapeur d'eau (25) tout en s'opposant à un écoulement d'eau de la chambre à vapeur d'eau (25) au réservoir (22) sur la base de différences de nature des écoulements respectifs,
**caractérisé en ce que**
ladite partie de base (2) comprend en outre un tube de séparation (10) pour définir la chambre à vapeur d'eau (25) dans le réservoir (22), dans lequel le tube de séparation (10) vient au contact avec le fond (24) du réservoir (22) par une première extrémité (11) lorsque le tube de séparation (10) est en place dans la partie de base (2) et dans lequel la première extrémité (11) du tube de séparation (10) est pourvue d'une cavité (12) pour former le canal entre le réservoir (22) et la chambre à vapeur d'eau (25), lequel canal est délimité par des parois (13, 14) et un fond (15) de la cavité (12) ainsi que par une partie du fond (24) du réservoir (22) qui est recouverte par le tube de séparation (10).

2. Dispositif (1) selon la revendication 1, dans lequel la première extrémité (11) du tube de séparation (10) est en outre pourvue d'encoches (16a, 16b, 17a, 17b) pour permettre d'accéder à la cavité (12) de l'intérieur du tube de séparation (10) lorsque la première extrémité (11) du tube de séparation (10) vient en contact avec le fond (24) du réservoir (22) et dans lequel des encoches (16a, 16b) dans une circonférence externe de la première extrémité (11) du tube de séparation (10) sont ménagées dans une autre position angulaire par rapport à un axe longitudinal (18) du tube de séparation (10) que les encoches (17a, 17b) dans une circonférence interne de la première extrémité (11) du tube de séparation (10).

3. Dispositif (1) selon la revendication 1, dans lequel à la fois une circonférence interne et une circonférence externe du tube de séparation (10) sont circulaires et dans lequel la cavité (12) a une forme annulaire.

4. Dispositif (1) selon la revendication 1, dans lequel le dispositif (1) est à même de réaliser un rendement de production de vapeur d'eau moyen d'au moins 0,2 gramme par Joule de chaleur fournie par les moyens de chauffage (23) au moins au cours d'une période de 1,5 à 5 minutes après le démarrage d'un processus de formation de vapeur d'eau à effectuer par le dispositif (1).

5. Dispositif (1) pour cuire des aliments à la vapeur d'eau selon la revendication 1, dans lequel le canal entre le réservoir (22) et la chambre à vapeur d'eau (25) est configuré pour permettre à l'eau de s'y écouler de manière régulière tout en résistant à un écoulement d'eau avec des variations fréquentes élevées.

6. Dispositif (1) pour cuire des aliments à la vapeur d'eau selon la revendication 1, dans lequel la surface de la section transversale du canal entre le réservoir (22) et la chambre à vapeur d'eau (25) se situe dans la plage de 0,5 à 50 mm² et dans lequel la longueur du canal est au maximum de 500 mm.

7. Dispositif (1) pour cuire des aliments à la vapeur d'eau selon la revendication 1, dans lequel la partie de base (2) comprend en outre un plateau d'égouttage (3) pour recevoir du fluide du au moins un panier (5, 6, 7) au cours du fonctionnement du dispositif (1) et pour fermer un côté supérieur ouvert du réservoir (22), et dans lequel le tube de séparation (10) vient en contact avec le plateau d'égouttage (3) par une seconde extrémité et supporte le plateau d'égouttage (3) sur le fond (24) du réservoir (22) lorsque le tube de séparation (10) et le plateau d'égouttage (3) sont en place dans la partie de base (2).

8. Dispositif (1) pour cuire des aliments à la vapeur d'eau selon la revendication 7, dans lequel le tube de séparation (10) fait partie intégrante du plateau d'égouttage (3).

9. Dispositif (1) pour cuire des aliments à la vapeur d'eau selon la revendication 1, comprenant en outre un circuit pour commander une alimentation électrique pour les moyens de chauffage (23), dans lequel le circuit comprend un capteur de température (35) qui est aménagé à une distance par rapport à un premier plan de forme annulaire imaginaire défini par une paroi externe (26) d'une sortie de vapeur d'eau (33) de la chambre à vapeur d'eau (25) et une extension de celle-ci dans une plage de 0,5 à 0,9 d'une distance totale entre le premier plan de forme annulaire imaginaire et un second plan de forme annulaire imaginaire défini par la paroi verticale (52, 62, 72) du au moins un panier (5, 6, 7) et de son extension mesurée le long d'une ligne imaginaire coupant à la fois un axe géométrique central (27) de la sortie de vapeur d'eau (33) et la position du capteur de température (35) dans un plan perpendiculaire à l'axe géométrique central (27) de la sortie de vapeur d'eau (33).

10. Dispositif (1) pour cuire des aliments à la vapeur d'eau selon la revendication 9, dans lequel la partie de base (2) comprend en outre un plateau d'égouttage (3) pour recevoir du fluide du au moins un panier (5, 6, 7) au cours du fonctionnement du dispositif (1) et pour fermer un côté supérieur ouvert du réservoir (22), et dans lequel le capteur de température (35) se situe dans une position dans le plateau d'égouttage (3).

11. Dispositif (1) pour cuire des aliments à la vapeur d'eau selon la revendication 9, dans lequel le circuit de commande est programmé pour réaliser au moins trois phases de température au cours du fonctionnement du dispositif (1), dans lequel la température associée à une phase de température intermédiaire est inférieure aux températures associées à une phase de température de démarrage et à une phase de température finale.

12. Dispositif (1) pour cuire des aliments à la vapeur d'eau selon la revendication 9, dans lequel l'unité de commande est programmée pour réaliser quatre phases de température, dans lequel, dans une première phase, la température est réglée dans une plage entre 80 et 100 °C au cours d'une période dans une plage comprise entre 2 et 10 minutes, dans lequel, dans une deuxième phase, la température est réglée dans une plage comprise entre 50 et 90 °C au cours d'une période dans une plage comprise entre 0 et 120 minutes, dans lequel, dans une troisième phase, la température est réglée dans une plage comprise entre 90 et 100 °C au cours d'une période dans une plage comprise entre 0 et 120 minutes et dans lequel, dans une quatrième phase, la température est réglée dans une plage comprise entre 60 et 100 °C au cours d'une période dans une plage comprise entre 0 et 60 minutes.

13. Dispositif (1) pour cuire des aliments à la vapeur d'eau selon la revendication 1, comprenant en outre un plateau (4) pour contenir des articles permettant d'ajouter des épices et des arômes aux aliments à cuire à la vapeur d'eau, le plateau ayant un fond (41) qui est au moins en partie perméable à la vapeur d'eau et qui est destiné à être positionné en dessous du au moins un panier (5, 6, 7) dans l'orientation normale du dispositif (1), dans un trajet suivi par la vapeur d'eau de la chambre à vapeur d'eau (25) au panier (5, 6, 7) au cours du fonctionnement du dispositif (1), dans lequel le plateau (4) est positionné librement par-dessus la sortie de vapeur d'eau (33) de la chambre à vapeur d'eau (25) sur le panier (5, 6, 7).

14. Dispositif (1) pour cuire des aliments à la vapeur d'eau selon la revendication 13, dans lequel le fond (51, 61, 71) du au moins un panier (5, 6, 7) comprend une zone en forme de dôme (55) dans une position pour recouvrir le plateau (4) avec la face concave tournée vers le plateau (4), et dans lequel des trous (56) permettant de laisser passer la vapeur d'eau sont ménagés dans la zone en forme de dôme (55).

15. Dispositif (1) pour cuire des aliments à la vapeur d'eau selon la revendication 13, dans lequel une unité (37) comprenant au moins deux couches avec des trous (38) dans des positions mutuellement différentes comme on l'observe dans la direction du trajet suivie par la vapeur d'eau de la chambre à vapeur d'eau (25) au au moins un panier (5, 6, 7) au cours du fonctionnement du dispositif (1) est aménagée dans la sortie de vapeur d'eau (33) de la chambre à vapeur d'eau (25).
